# EUROPEAN PATENT SPECIFICATION

(11) **EP 4 529 339 B1**
(45) Date of publication and mention of the grant of the patent: **11.11.2026**
(21) Application number: 25156107.2
(22) Date of filing: 13.02.2023
(51) Int. Cl.: H04W 72/12, H04W 74/04, H04B 1/7163, H04W 64/00, H04W 74/08

(54) **UPLINK-TDOA ENHANCEMENTS FOR ULTRA-WIDEBAND (UWB)**
UPLINK-TDOA-VERBESSERUNGEN FÜR ULTRABREITBAND (UWB)
AMÉLIORATIONS DE LIAISON MONTANTE-TDOA POUR BANDE ULTRALARGE (UWB)

(30) Priority: 25.02.2022 GR 20220100175
(43) Date of publication of application: 26.03.2025
(62) Document number(s) of the earlier application(s) in accordance with Art. 76 EPC: 23710950.9 / 4 483 655
(73) Proprietor: QUALCOMM Incorporated, San Diego, CA 92121-1714 (US)
(72) Inventor: REDDY, Varun Amar, San Diego, 92121-1714 (US); MANOLAKOS, Alexandros, San Diego, 92121-1714 (US); PAKROOH, Pooria, San Diego, 92121-1714 (US); MUKKAVILLI, Krishna Kiran, San Diego, 92121-1714 (US)
(74) Representative: Reddie & Grose LLP

(56) References cited:
- EP-A1- 3 826 381
- MACOIR NICOLA ET AL: "MAC Protocol for Supporting Multiple Roaming Users in Mult-Cell UWB Localization Networks", 2018 IEEE 19TH INTERNATIONAL SYMPOSIUM ON "A WORLD OF WIRELESS, MOBILE AND MULTIMEDIA NETWORKS" (WOWMOM), IEEE, 12 June 2018 (2018-06-12), pages 588 - 599, XP033394352, DOI: 10.1109/WOWMOM.2018.8449815

## Description

### BACKGROUND

### 1. Field of Disclosure

The present disclosure relates generally to the field of radio frequency (RF)-based position determination (or positioning) of an electronic wireless device. More specifically, the present disclosure relates to ultra-wideband (UWB)-based positioning.

### 2. Description of Related Art

The positioning of devices can have a wide range of consumer, industrial, commercial, military, and other applications. UWB-based ranging (e.g., as defined in IEEE 802.15.4ab and/or other wireless specifications) offers a highly-accurate, low-power positioning solution of UWB-enabled devices (herein, "UWB devices") relative to other RF-based positioning techniques for wireless electronic devices. Current techniques for UWB-based ranging can involve performing RF measurements using contention and/or contention-free signaling. The use of contention-based signaling can allow for discovery of new devices, and the use of contention-free signaling can help reduce RF interference. UWB-based ranging can utilize both techniques in a single UWB positioning session, although this can result in a limitation to the number of devices that are able to participate in a session.
EP 3 826 381 A1 discloses a method of managing a communication system with a plurality of anchor devices using ultra-wide band communication.

### BRIEF SUMMARY

The invention is defined in the independent claims. Optional features are set out in the dependent claims.

. The foregoing, together with other features and examples, will be described in more detail below in the following specification, claims, and accompanying drawings.

### BRIEF DESCRIPTION OF THE DRAWINGS

The appended drawings are provided to complement the following description. It can be noted that, the term "background" is included in the text of many of the appended drawings to provide context for the embodiments described herein. It does not necessarily follow, however, that such information should be considered prior art. Some information identified as background in the appended drawings may, in fact, comprise novel features used by one or more embodiments described herein.
FIG. 1 is a diagram of a positioning system, according to an embodiment.
FIGS. 2A and 2B are simplified diagrams illustrating examples of how ultra-wideband (UWB) positioning/ranging may be performed in a network of UWB devices.
FIGS. 3A and 3B are flow diagrams illustrating how different devices may assume different roles with regard to a UWB positioning session.
FIG. 4 is a timing diagram of time segmentation within a UWB ranging session at the MAC layer, according to some embodiments.
FIGS. 5A and 5B are timing diagrams illustrating how contention-based ranging using a Contention Access Period (CAP) may be implemented, according to some embodiments.
FIG. 6 is a timing diagram of an example series of ranging blocks used for UL-TDoA, according to an embodiment.
FIG. 7 is a timing diagram of a hybrid-based ranging browned, according to an embodiment.
FIG. 8 is a message flow diagram 800 illustrating a process for moving a tag from a CAP to a contention free period (CFP), according to an embodiment.
FIG. 9 is a flow diagram of a method of coordinating UWB positioning of the mobile device, according to an embodiment.
FIG. 10 is flow diagram of a method of CFP selection for Uplink Time Difference of Arrival (UL-TDoA) ultra-wideband (UWB) position positioning of a mobile device, according to an embodiment.

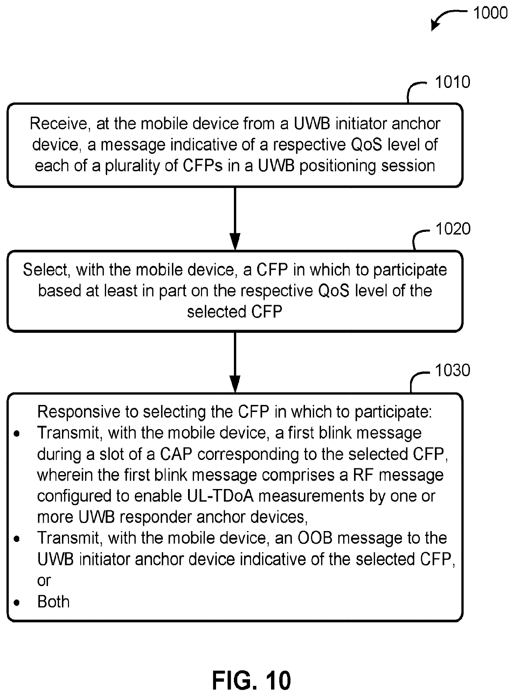

FIG. 10 is an information slide describing how a UL-TDoA session may be selected.

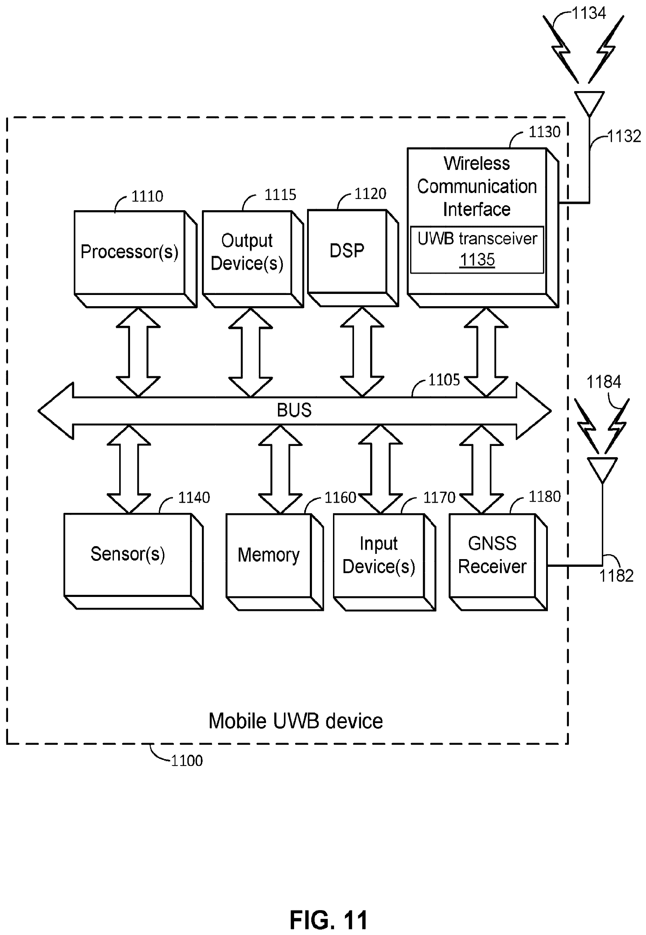

FIG. 11 is a block diagram of an embodiment of a mobile UWB device.

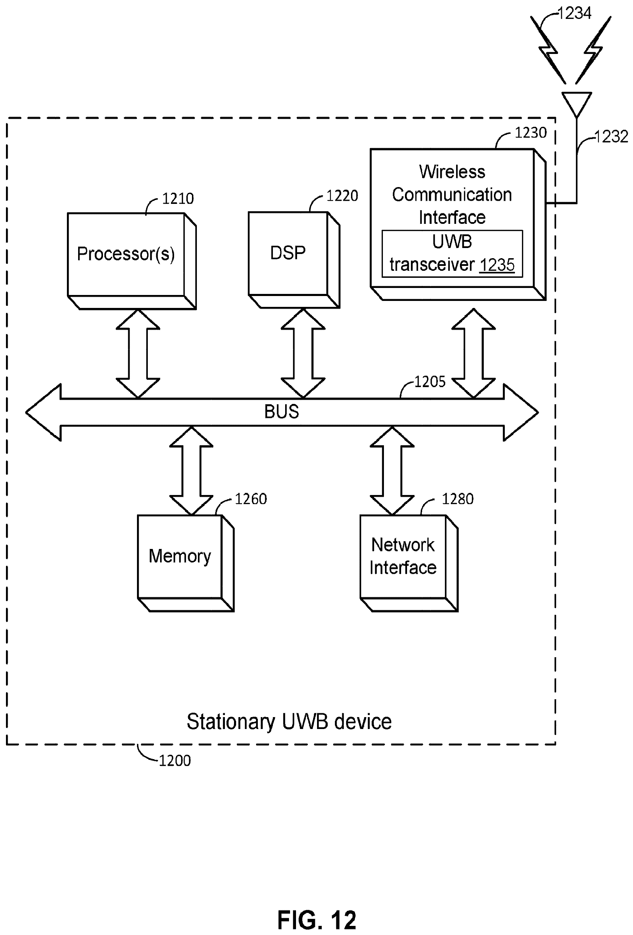

FIG. 12 is a block diagram of an embodiment of a stationary UWB device, which can be utilized in embodiments as described herein.

Like reference symbols in the various drawings indicate like elements, in accordance with certain example implementations. In addition, multiple instances of an element may be indicated by following a first number for the element with a letter or a hyphen and a second number. For example, multiple instances of an element 110 may be indicated as 110-1, 110-2, 110-3 etc. or as 110a, 110b, 110c, etc. When referring to such an element using only the first number, any instance of the element is to be understood (e.g., element 110 in the previous example would refer to elements 110-1, 110-2, and 110-3 or to elements 110a, 110b, and 110c).

### DETAILED DESCRIPTION

The following description is directed to certain implementations for the purposes of describing innovative aspects of various embodiments. However, a person having ordinary skill in the art will readily recognize that the teachings herein can be applied in a multitude of different ways. The described implementations may be implemented in any device, system, or network that is capable of transmitting and receiving radio frequency (RF) signals according to any communication standard, such as any of the Institute of Electrical and Electronics Engineers (IEEE) 802.15.4 standards for ultra-wideband (UWB), IEEE 802.11 standards (including those identified as Wi-Fi^{®} technologies), the Bluetooth^{®} standard, code division multiple access (CDMA), frequency division multiple access (FDMA), time division multiple access (TDMA), Global System for Mobile communications (GSM), GSM/General Packet Radio Service (GPRS), Enhanced Data GSM Environment (EDGE), Terrestrial Trunked Radio (TETRA), Wideband-CDMA (W-CDMA), Evolution Data Optimized (EV-DO), 1xEV-DO, EV-DO Rev A, EV-DO Rev B, High Rate Packet Data (HRPD), High Speed Packet Access (HSPA), High Speed Downlink Packet Access (HSDPA), High Speed Uplink Packet Access (HSUPA), Evolved High Speed Packet Access (HSPA+), Long Term Evolution (LTE), Advanced Mobile Phone System (AMPS), or other known signals that are used to communicate within a wireless, cellular or internet of things (IoT) network, such as a system utilizing 3G, 4G, 5G, 6G, or further implementations thereof, technology.

As used herein, an "RF signal" comprises an electromagnetic wave that transports information through the space between a transmitter (or transmitting device) and a receiver (or receiving device). As used herein, a transmitter may transmit a single "RF signal" or multiple "RF signals" to a receiver. However, the receiver may receive multiple "RF signals" corresponding to each transmitted RF signal due to the propagation characteristics of RF signals through multiple channels or paths.

Further, unless otherwise specified, the term "positioning," "position determination," "location determination," "location estimation," and the like, as used herein may include absolute location determination, relative location determination, ranging, or a combination thereof. Such positioning may include and/or be based on timing, angular, phase, or power measurements, or a combination thereof (which may include RF sensing measurements) for the purpose of location or sensing services.

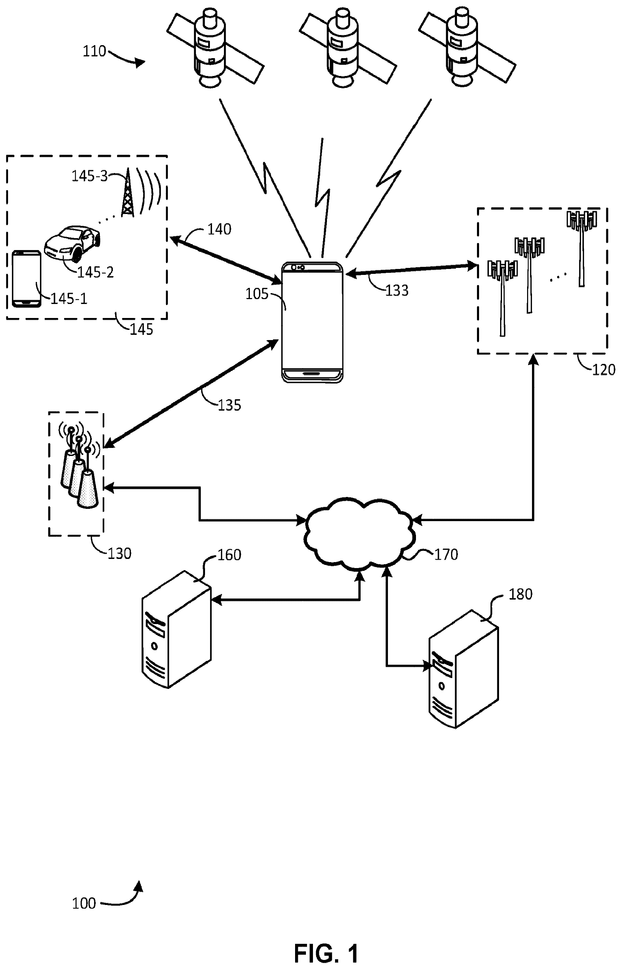

As previously noted, UWB-based positioning offers a highly-accurate, low-power positioning solution relative to other RF-based positioning techniques for wireless electronic devices. UWB-based positioning can be used in industrial applications, such as by robots and/or other Internet of Things (IoT) devices in a factory setting, indoor positioning of consumer electronics, and more. Although UWB-based positioning may be used in an ad hoc manner as a standalone positioning technique between electronic devices capable of UWB positioning (also referred to herein as "UWB devices"), in some embodiments UWB-based positioning may be used as one of many techniques for positioning an electronic device in a positioning system. FIG. 1, described below, provides an example of such a positioning system.

Various aspects of this disclosure relate generally to UWB positioning or ranging. Some aspects more specifically relate to hybrid-based UWB ranging having a contention access period (CAP) and contention free period (CFP). In some examples, uplink time difference of arrival (UL-TDoA) positioning of a target UWB mobile device, or tag, by one or more UWB anchor devices, including an initiator anchor (Init-anchor) and one or more responder anchors (Resp-anchors), which receive a blink message from the target UWB mobile device to perform (UL-TDoA) measurements during a CAP. Based on the receipt of the blink message, the target UWB mobile device may be given a scheduled slot in a subsequent CFP. The Init-anchor may provide the target UWB mobile device with the scheduled slot, and the schedule may be provided via a downlink message during a UWB session and/or using out of band (OOB) messaging. Scheduling may be based on a variety of factors, and prioritization of certain UWB mobile devices may be considered.

Particular aspects of the subject matter described in this disclosure can be implemented to realize one or more of the following potential advantages. In some examples, by moving the messaging from the target UWB mobile device from a CAP to a CFP, the described techniques can be used to make more efficient use of bandwidth and power usage among devices participating in a UWB positioning session. These and other advantages will be apparent to a person of ordinary skill in the art in view of the embodiments described herein. Embodiments are described below, following a review of applicable technology.

**FIG.** 1 is a simplified illustration of a positioning system 100 in which a mobile device 105, location server 160, and/or other components of the positioning system 100 can use the techniques provided herein for UWB-based ranging for a mobile device 105, according to an embodiment. The techniques described herein may be implemented by one or more components of the positioning system 100. The positioning system 100 can include: a mobile device 105; one or more satellites 110 (also referred to as space vehicles (SVs)) for a Global Navigation Satellite System (GNSS) such as the Global Positioning System (GPS), GLONASS, Galileo or Beidou; base stations 120; access points (APs) 130; location server 160; network 170; and external client 180. Generally put, the positioning system 100 can estimate a location of the mobile device 105 based on RF signals received by and/or sent from the mobile device 105 and known locations of other components (e.g., GNSS satellites 110, base stations 120, APs 130) transmitting and/or receiving the RF signals.

It should be noted that FIG. 1 provides only a generalized illustration of various components, any or all of which may be utilized as appropriate, and each of which may be duplicated as necessary. Specifically, although only one mobile device 105 is illustrated, it will be understood that many mobile devices (e.g., hundreds, thousands, millions, etc.) may utilize the positioning system 100. Similarly, the positioning system 100 may include a larger or smaller number of base stations 120 and/or APs 130 than illustrated in FIG. 1. The illustrated connections that connect the various components in the positioning system 100 comprise data and signaling connections which may include additional (intermediary) components, direct or indirect physical and/or wireless connections, and/or additional networks. Furthermore, components may be rearranged, combined, separated, substituted, and/or omitted, depending on desired functionality. In some embodiments, for example, the external client 180 may be directly connected to location server 160. A person of ordinary skill in the art will recognize many modifications to the components illustrated.

Depending on desired functionality, the network 170 may comprise any of a variety of wireless and/or wireline networks. The network 170 can, for example, comprise any combination of public and/or private networks, local and/or wide-area networks, and the like. Furthermore, the network 170 may utilize one or more wired and/or wireless communication technologies. In some embodiments, the network 170 may comprise a cellular or other mobile network, a wireless local area network (WLAN), a wireless wide-area network (WWAN), and/or the Internet, for example. Examples of network 170 include a Long-Term Evolution (LTE) wireless network, a Fifth Generation (5G) wireless network (also referred to as New Radio (NR) wireless network or 5G NR wireless network), a Wi-Fi WLAN, and the Internet. LTE, 5G and NR are wireless technologies defined, or being defined, by the 3rd Generation Partnership Project (3GPP). Network 170 may also include more than one network and/or more than one type of network. A mobile device of a cellular network (e.g., LTE and/or NR) also may be referred to as a User Equipment (UE).

The base stations 120 and access points (APs) 130 may be communicatively coupled to the network 170. In some embodiments, the base station 120s may be owned, maintained, and/or operated by a cellular network provider, and may employ any of a variety of wireless technologies, as described herein below. Depending on the technology of the network 170, a base station 120 may comprise a node B, an Evolved Node B (eNodeB or eNB), a base transceiver station (BTS), a radio base station (RBS), an NR NodeB (gNB), a Next Generation eNB (ng-eNB), or the like. A base station 120 that is a gNB or ng-eNB may be part of a Next Generation Radio Access Network (NG-RAN) which may connect to a 5G Core Network (5GC) in the case that Network 170 is a 5G network. The functionality performed by a base station 120 in earlier-generation networks (e.g., 3G and 4G) may be separated into different functional components (e.g., radio units (RUs), distributed units (DUs), and central units (CUs)) and layers (e.g., L1/L2/L3) in view of Open Radio Access Networks (O-RAN) and/or Virtualized Radio Access Network (V-RAN or vRAN) in 5G or later networks, which may be executed on different devices at different locations connected, for example, via fronthaul, midhaul, and backhaul connections. As referred to herein, a "base station" (or ng-eNB, gNB, etc.) may include any or all of these functional components. An AP 130 may comprise a Wi-Fi AP or a Bluetooth^{®} AP or an AP having cellular capabilities (e.g., 4G LTE and/or 5G NR), for example. Thus, mobile device 105 can send and receive information with network-connected devices, such as location server 160, by accessing the network 170 via a base station 120 using a first communication link 133. Additionally or alternatively, because APs 130 also may be communicatively coupled with the network 170, mobile device 105 may communicate with network-connected and Internet-connected devices, including location server 160, using a second communication link 135, or via one or more other mobile devices 145.

As used herein, the term "base station" may generically refer to a single physical transmission point, or multiple co-located physical transmission points, which may be located at a base station 120. A Transmission Reception Point (TRP) (also known as transmit/receive point) corresponds to this type of transmission point, and the term "TRP" may be used interchangeably herein with the terms "gNB," "ng-eNB," and "base station." In some cases, a base station 120 may comprise multiple TRPs - e.g. with each TRP associated with a different antenna or a different antenna array for the base station 120. As used herein, the transmission functionality of a TRP may be performed with a transmission point (TP) and/or the reception functionality of a TRP may be performed by a reception point (RP), which may be physically separate or distinct from a TP. That said, a TRP may comprise both a TP and an RP. Physical transmission points may comprise an array of antennas of a base station 120 (e.g., as in a Multiple Input-Multiple Output (MIMO) system and/or where the base station employs beamforming). The term "base station" may additionally refer to multiple non-co-located physical transmission points, the physical transmission points may be a Distributed Antenna System (DAS) (a network of spatially separated antennas connected to a common source via a transport medium) or a Remote Radio Head (RRH) (a remote base station connected to a serving base station).

As used herein, the term "cell" may generically refer to a logical communication entity used for communication with a base station 120, and may be associated with an identifier for distinguishing neighboring cells (e.g., a Physical Cell Identifier (PCID), a Virtual Cell Identifier (VCID)) operating via the same or a different carrier. In some examples, a carrier may support multiple cells, and different cells may be configured according to different protocol types (e.g., Machine-Type Communication (MTC), Narrowband Internet-of-Things (NB-IoT), Enhanced Mobile Broadband (eMBB), or others) that may provide access for different types of devices. In some cases, the term "cell" may refer to a portion of a geographic coverage area (e.g., a sector) over which the logical entity operates.

The location server 160 may comprise a server and/or other computing device configured to determine an estimated location of mobile device 105 and/or provide data (e.g., "assistance data") to mobile device 105 to facilitate location measurement and/or location determination by mobile device 105. According to some embodiments, location server 160 may comprise a Home Secure User Plane Location (SUPL) Location Platform (H-SLP), which may support the SUPL user plane (UP) location solution defined by the Open Mobile Alliance (OMA) and may support location services for mobile device 105 based on subscription information for mobile device 105 stored in location server 160. In some embodiments, the location server 160 may comprise, a Discovered SLP (D-SLP) or an Emergency SLP (E-SLP). The location server 160 may also comprise an Enhanced Serving Mobile Location Center (E-SMLC) that supports location of mobile device 105 using a control plane (CP) location solution for LTE radio access by mobile device 105. The location server 160 may further comprise a Location Management Function (LMF) that supports location of mobile device 105 using a control plane (CP) location solution for NR or LTE radio access by mobile device 105.

In a CP location solution, signaling to control and manage the location of mobile device 105 may be exchanged between elements of network 170 and with mobile device 105 using existing network interfaces and protocols and as signaling from the perspective of network 170. In a UP location solution, signaling to control and manage the location of mobile device 105 may be exchanged between location server 160 and mobile device 105 as data (e.g. data transported using the Internet Protocol (IP) and/or Transmission Control Protocol (TCP)) from the perspective of network 170.

As previously noted (and discussed in more detail below), the estimated location of mobile device 105 may be based on measurements of RF signals sent from and/or received by the mobile device 105. In particular, these measurements can provide information regarding the relative distance and/or angle of the mobile device 105 from one or more components in the positioning system 100 (e.g., GNSS satellites 110, APs 130, base stations 120). The estimated location of the mobile device 105 can be estimated geometrically (e.g., using multiangulation and/or multilateration), based on the distance and/or angle measurements, along with known position of the one or more components.

Although terrestrial components such as APs 130 and base stations 120 may be fixed, embodiments are not so limited. Mobile components may be used. For example, in some embodiments, a location of the mobile device 105 may be estimated at least in part based on measurements of RF signals 140 communicated between the mobile device 105 and one or more other mobile devices 145, which may be mobile or fixed. As illustrated, other mobile devices may include, for example, a mobile phone 145-1, vehicle 145-2, static communication/positioning device 145-3, or other static and/or mobile device capable of providing wireless signals used for positioning the mobile device 105, or a combination thereof. Wireless signals from mobile devices 145 used for positioning of the mobile device 105 may comprise RF signals using, for example, Bluetooth^{®} (including Bluetooth Low Energy (BLE)), IEEE 802.11x (e.g., Wi-Fi^{®}), UWB, IEEE 802.15x, or a combination thereof. Mobile devices 145 may additionally or alternatively use non-RF wireless signals for positioning of the mobile device 105, such as infrared signals or other optical technologies.

Mobile devices 145 may comprise UEs communicatively coupled with a cellular or other mobile network (e.g., network 170). When one or more other mobile devices 145 comprising UEs are used in the position determination of a particular mobile device 105, the mobile device 105 for which the position is to be determined may be referred to as the "target UE," and each of the other mobile devices 145 used may be referred to as an "anchor UE." For position determination of a target UE, the respective positions of the one or more anchor UEs may be known and/or jointly determined with the target UE. Direct communication between the one or more other mobile devices 145 and mobile device 105 may comprise sidelink and/or similar Device-to-Device (D2D) communication technologies. Sidelink, which is defined by 3GPP, is a form of D2D communication under the cellular-based LTE and NR standards. As described hereafter, UWB may be one such technology by which the positioning of a target device (e.g., mobile device 105) may be facilitated using measurements from one or more anchor devices (e.g., mobile devices 145). Measurements of distance between the target device and one or more anchor devices may be referred to herein as "ranging."

According to some embodiments, such as when the mobile device 105 comprises and/or is incorporated into a vehicle, a form of D2D communication used by the mobile device 105 may comprise vehicle-to-everything (V2X) communication. V2X is a communication standard for vehicles and related entities to exchange information regarding a traffic environment. V2X can include vehicle-to-vehicle (V2V) communication between V2X-capable vehicles, vehicle-to-infrastructure (V2I) communication between the vehicle and infrastructure-based devices (commonly termed roadside units (RSUs)), vehicle-to-person (V2P) communication between vehicles and nearby people (pedestrians, cyclists, and other road users), and the like. Further, V2X can use any of a variety of wireless RF communication technologies. Cellular V2X (CV2X), for example, is a form of V2X that uses cellular-based communication such as LTE (4G), NR (5G) and/or other cellular technologies in a direct-communication mode as defined by 3GPP. The mobile device 105 illustrated in FIG. 1 may correspond to a component or device on a vehicle, RSU, or other V2X entity that is used to communicate V2X messages. In embodiments in which V2X is used, the static communication/positioning device 145-3 (which may correspond with an RSU) and/or the vehicle 145-2, therefore, may communicate with the mobile device 105 and may be used to determine the position of the mobile device 105 using techniques similar to those used by base stations 120 and/or APs 130 (e.g., using multiangulation and/or multilateration). It can be further noted that mobile devices 145 (which may include V2X devices), base stations 120, and/or APs 130 may be used together (e.g., in a WWAN positioning solution) to determine the position of the mobile device 105, according to some embodiments.

An estimated location of mobile device 105 can be used in a variety of applications - e.g. to assist direction finding or navigation for a user of mobile device 105 or to assist another user (e.g. associated with external client 180) to locate mobile device 105. A "location" is also referred to herein as a "location estimate", "estimated location", "location", "position", "position estimate", "position fix", "estimated position", "location fix" or "fix". The process of determining a location may be referred to as "positioning," "position determination," "location determination," or the like. A location of mobile device 105 may comprise an absolute location of mobile device 105 (e.g. a latitude and longitude and possibly altitude) or a relative location of mobile device 105 (e.g. a location expressed as distances north or south, east or west and possibly above or below some other known fixed location (including, e.g., the location of a base station 120 or AP 130) or some other location such as a location for mobile device 105 at some known previous time, or a location of a mobile device 145 (e.g., another UE) at some known previous time). A location may be specified as a geodetic location comprising coordinates which may be absolute (e.g. latitude, longitude and optionally altitude), relative (e.g. relative to some known absolute location) or local (e.g. X, Y and optionally Z coordinates according to a coordinate system defined relative to a local area such a factory, warehouse, college campus, shopping mall, sports stadium or convention center). A location may instead be a civic location and may then comprise one or more of a street address (e.g. including names or labels for a country, state, county, city, road and/or street, and/or a road or street number), and/or a label or name for a place, building, portion of a building, floor of a building, and/or room inside a building etc. A location may further include an uncertainty or error indication, such as a horizontal and possibly vertical distance by which the location is expected to be in error or an indication of an area or volume (e.g. a circle or ellipse) within which mobile device 105 is expected to be located with some level of confidence (e.g. 95% confidence).

The external client 180 may be a web server or remote application that may have some association with mobile device 105 (e.g. may be accessed by a user of mobile device 105) or may be a server, application, or computer system providing a location service to some other user or users which may include obtaining and providing the location of mobile device 105 (e.g. to enable a service such as friend or relative finder, or child or pet location). Additionally or alternatively, the external client 180 may obtain and provide the location of mobile device 105 to an emergency services provider, government agency, etc.

As noted, positioning of the mobile device 105 may be facilitated by a location server 160, which may be part of a cellular network. Additionally or alternatively, the location server 160 may be capable of facilitating other types of network-based positioning, including positioning using APs 130 (e.g., Wi-Fi positioning) and/or mobile devices 145 (e.g., Bluetooth positioning, UWB positioning, etc.). To do so, the location server 160 may communicate with one or more devices (e.g., a target device such as the mobile device 105 and/or one or more anchor devices), coordinate positioning sessions with the one or more devices, provide assistance data for positioning-related measurements and/or calculations, receive measurement data from one or more devices for determining a position of a target device, provide synchronization-related data, or perform a combination these tasks, for example. According to some embodiments, the location server 160 may support various procedures/methods such as Assisted GNSS (A-GNSS), Time Difference Of Arrival (TDoA) (which also may be referred to as Observed Time Difference Of Arrival (OTDoA)), Real Time Kinematic (RTK), Precise Point Positioning (PPP), Differential GNSS (DGNSS), Enhance Cell ID (ECID), angle of arrival (AoA), angle of departure (AoD), WLAN positioning, RTT, multi-cell RTT, two-way ranging (TWR) (e.g., including single-sided TWR (SS-TWR) and/or double-sided TWR (DS-TWR)), and/or other positioning procedures and methods. The location server 160 may process location service requests for the mobile device 105 and/or third parties (e.g., a device communicatively coupled with the location server 160 and authorized to receive a position of the mobile device 105).

To support various positioning procedures/methods, the mobile device 105 and/or one or more anchor devices may be capable of performing any of a variety of measurements and/or procedures. This can include, for example, Received Signal Strength Indicator (RSSI), RTT, Reference Signal Received Power (RSRP), Reference Signal Received Quality (RSRQ), Reference Signal Time Difference (RSTD), Time of Arrival (ToA), AoA, Receive Time-Transmission Time Difference (Rx-Tx), Differential AoA (DAoA), AoD, or Timing Advance (TA).

In some embodiments, TDoA assistance data may be provided to a mobile device 105 by the location server 160 for a reference signal and one or more response or neighbor signals, relative to the reference signal. For example, the assistance data may provide timing, frequency, and/or other parameters of the reference and response/neighbor signals to allow a device (e.g., a target and/or anchor) to perform ToA and/or RSTD measurements for TDoA positioning. Using the RSTD measurements, the known absolute or relative transmission timing of each cell, and the known position(s) of wireless node physical transmitting antennas (e.g., anchors) for the reference and response/neighbor signals, the UE position may be calculated (e.g., by the mobile device 105 or by the location server 160). More particularly, the RSTD for a neighbor signal "*k*" relative to a reference signal "Ref," may be given as (ToA*ₖ* - ToA*_{Ref}*). ToA measurements for different signals may then be converted to RSTD measurements and sent to the location server 160 by the mobile device 105. Using (i) the RSTD measurements, (ii) the known absolute or relative transmission timing of each cell, (iii) the known position(s) of physical transmitting antennas that transmit the reference and response/neighbor signals, and/or (iv) directional characteristics of the signals such as a direction of transmission, the mobile device 105 position may be determined.

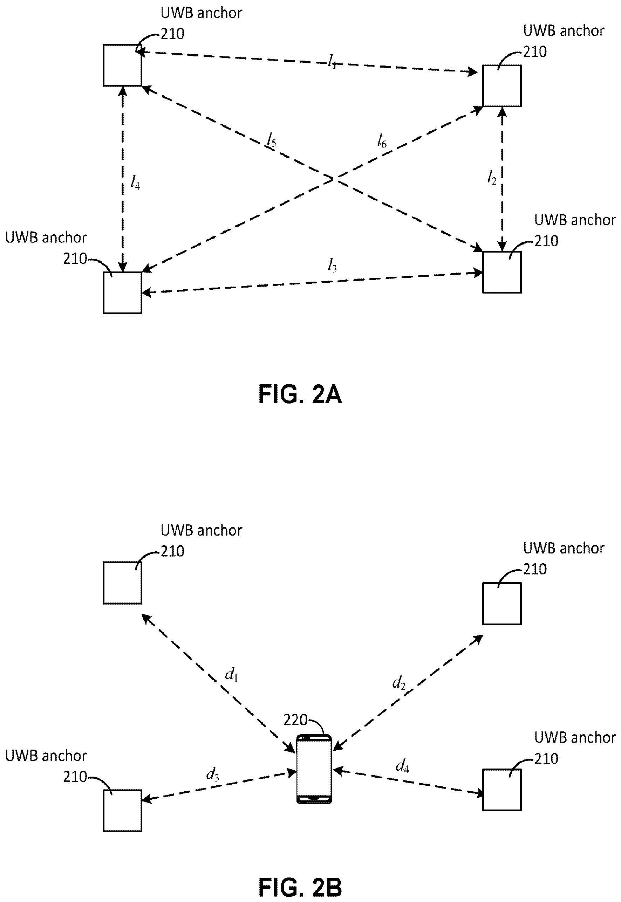

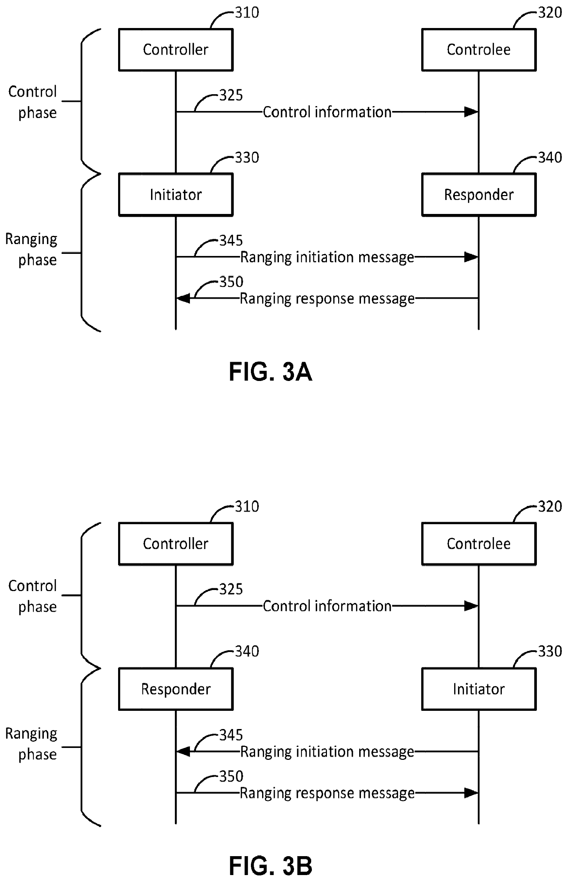

With regard to UWB-based positioning, UWB devices may conduct "sessions" during which the devices engage in direct communications (e.g., D2D communications) to coordinate the exchange of ranging frames from which ToA may be determined. Further, different types of measurements may be performed during these sessions to conduct the UWB-based position. FIGS. 2A and 2B, discussed below, provide examples of what types of measurements may be performed. And FIGS. 3A-3B, also discussed below, provide additional details regarding UWB-positioning sessions.

UWB devices may vary in form and function. As indicated in FIG. 1, a UWB device may comprise a mobile device such as a mobile phone with UWB functionality. Similarly, UWB devices may comprise other personal electronics, such as laptops, tablets, personal media players, or the like. Further, as noted, UWB devices may comprise vehicles, drones, robots, or other mobile devices that may move autonomously, and may be used in consumer, industrial, military, and/or other applications. UWB devices may also comprise tracking devices used in logistical applications to track packages, shipping containers, or the like. Additionally or alternatively, UWB devices (such as UWB anchors, described hereafter) may comprise proprietary and/or dedicated RF beacons deployed at known locations for monitoring the location of tags or devices used in logistical applications and/or tracking applications (e.g., in a factory, warehouse, hospital, etc.). UWB devices may be used in proximity applications to, for example, unlock the door as a user (e.g., an authorized user) approaches. UWB devices may also be used in other applications and/or device types. Some UWB devices may also be deployed in a factory setting to monitor robots, assembled parts, or the like.

FIGS. 2A **and 2B** are simplified diagrams illustrating how UWB positioning may be performed in a network of UWB anchors 210. As noted, anchor devices (referred to herein as "anchors" or "UWB anchors") may comprise UWB devices with known locations that can be used to determine the position of a target 220, or "tag," using UWB RF signals. UWB positioning may be performed utilizing relevant standards (e.g., IEEE 802.15.4ab), which enable high-accuracy, low power positioning. One or more of the UWB anchors 210 and/or UWB target 220 may be connected with a network, such as in the manner illustrated in the positioning system 100 of FIG. 1. In some embodiments, the UWB anchors 210 and/or UWB target 220 may form an ad-hoc network, which may or may not be connected with a network (e.g., in the manner shown in FIG. 1). Further, the UWB anchors 210 and/or UWB target 220 may comprise any of a variety of device types, as previously indicated.

If the position of one or more UWB anchors 210 is not yet known, such as in an ad-hoc network, an initial provisioning of the UWB anchors 210 may be performed. In the provisioning, UWB anchors 210 may perform ranging measurements to determine relative distances (*l*1-*l*6) between UWB devices 210, as illustrated in FIG. 2A. This can enable the UWB anchors 210 to determine the relative locations with one another and, if the absolute location of any UWB anchor 210 is known, the absolute locations (e.g., with respect to a coordinates system). Once the positions of the UWB anchors 210 is known, the determination of location of a target 220 can be made by determining the distances (*d*1-*d*6) between the UWB anchors 210 and target 220. These distances can be determined using a variety of positioning-related measurements and/or procedures. This can include, for example, RSTD, ToA, two-way ranging (TWR) (e.g., including single-sided TWR (SS-TWR) and/or double-sided TWR (DS-TWR)), TDoA, and more. Additionally or alternatively, angle-based measurements may be made for positioning of the target 220, including angle of arrival (AoA) and /or Angle of departure (AoD).

As noted group of UWB anchors 210 may conduct sessions in which UWB anchors 210 perform a series of operations to determine the position of one or more of the devices, and during which the UWB anchors 210 engage in direct communications (e.g., D2D communications) to coordinate the exchange of data, synchronize (e.g., for TDoA positioning). A group of UWB anchors 210 may be called a "cluster," and a network of UWB devices may comprise multiple clusters. Each cluster may include any number of UWB anchors 210, and different clusters may overlap, such that one or more UWB anchors 210 may be a part of one or more different clusters.

**FIG. 3A** is a flow diagram illustrating the roles different devices may assume with regard to a UWB ranging session (or simply a "UWB session"), which may be conducted in accordance with a relevant UWB positioning standard (e.g., IEEE 802.15.4ab). Here, each UWB device may be referred to as an enhanced ranging device (ERDEV). ERDEVs may be referred to different terminologies (e.g. initiator/responder or controller/controlee) at different layers of the network stack. The terms initiator and responder (described hereafter) would be used at lower layers (e.g., at UWB physical (PHY) and media access control (MAC) layers), while the terms controller and controlee (also described hereafter) may be used at higher layers (e.g., an application layer of the ERDEVs).

As indicated, for a pair of ERDEVs communicating with each other, the controller 310 is an ERDEV that sends control information 325 to a receiving ERDEV, designated as the controlee 320. The control information 325 may include parameters for the UWB ranging session, such as timing, channel, etc. Although not illustrated, the controlee 320 can send acknowledgment to the control information 325, may negotiate changes to the parameters, and/or the like.

The exchange between controller 310 and controlee 320, including the sending of the control information 325 and subsequent related exchanges between controller 310 and controlee 320 regarding control information, may be conducted out of band (OOB) using a different wireless communication technology (e.g., Bluetooth or Wi-Fi), prior to a ranging phase. Put differently, a UWB session may be associated with a control phase and a ranging phase, where the control phase (which may take place on an OOB link) comprises a preliminary exchange between controller 310 and controlee 320 of parameter values for the ranging phase, and the subsequent ranging phase comprises the portion of the UWB session in which devices exchange messages within the UWB band for ranging measurements. (It can be noted, however, that some control information may be exchanged within the UWB band (e.g., a "ranging control phase" occurring in the first slot of a UWB round). Accordingly, some aspects of the control phase may be considered to occur in band, subsequent to the preliminary OOB exchange between the controller 310 and controlee 320.)

The UWB session may occur afterward, in accordance with the parameters provided in the control information. In the ranging phase of the UWB session, one ERDEV may take the role of an initiator 330 and the other ERDEV may take the role of a responder 340. As indicated in FIG. 3A, the initiator 330 may initiate UWB ranging by sending a ranging initiation message 345 to the responder 340, to which the responder 340 may reply with a ranging response message 350, and timing measurements may be made of these messages (by the devices receiving the messages) to perform two-way ranging (TWR). Depending on the parameters of the control information 325, additional exchanges may be made in the ranging phase between the initiator 330 and responder 340 to allow for additional ranging measurements.

The roles of initiator 330 and responder 340 may be indicated in the control information 325. Further, as indicated in FIG. 3A, the controller 310 in the control phase may be the initiator 330 in the ranging phase of the UWB session. Alternatively, as indicated in FIG. 3B, the controller 310 in the control phase may be the responder 340 in the ranging phase. The determination of which device is initiator 330 and which is responder 340 may depend on the parameters set forth in the control information 325, in which case the controlee 320 correspondingly becomes either the responder 340 or the initiator 330. According to some embodiments, a controller/initiator may conduct ranging with multiple controlees/responders.

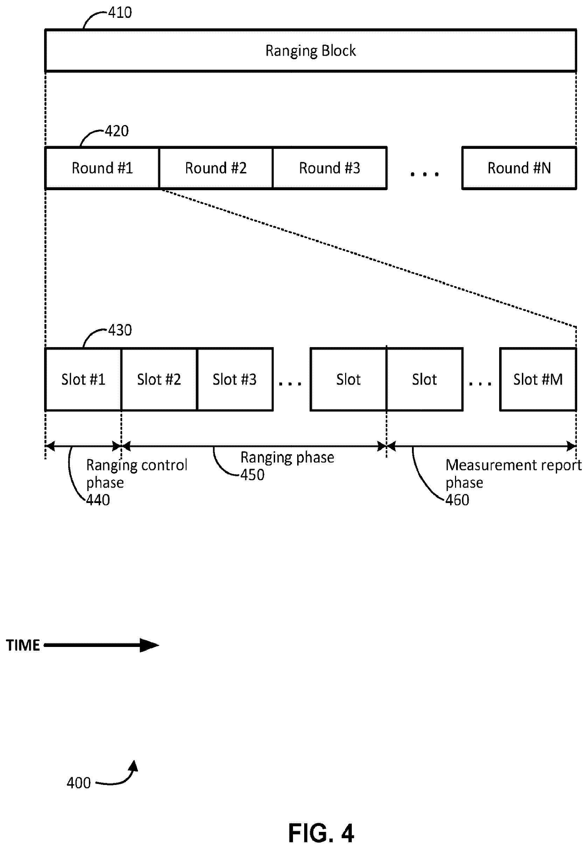

**FIG.** 4 is a timing diagram 400 illustrating how time may be segmented and utilized within a UWB ranging session at the MAC layer, which may be used for time-scheduled or contention-free ranging, according to some embodiments. Similar to a time-division multiple access (TDMA) scheme, the UWB session defines timing (again, between two UWB devices) during which ranging can occur. A UWB session may occur over a period of time divided into sub-portions according to a hierarchical structure. This timing comprises one or more consecutive ranging blocks 410, which may have a configurable duration (e.g., 200 ms). (For simplicity, only one ranging block 410 is shown in FIG. 4. However, a UWB session may utilize multiple ranging blocks, which may occur in succession.) Each ranging block 410 may be split into one or more successive rounds 420 (e.g., N rounds). The number and length of the rounds may be configurable. The rounds 420 may be further split into different slots 430, which also may have a configurable number and length. The multiple rounds may be used for interference handling. As indicated in FIG. 4, a given responder can transmit a message only within a single round per ranging block, and the round index may either be statistically configured by the controller or selected per a hopping pattern. Multiple UWB sessions can be time-multiplexed to prevent interference with one another.

The slots within a round 420 may be allocated for different purposes. For example, the initial slot may be dedicated as the ranging control phase 440, in which an initiator UWB anchor for the cluster, or Init-anchor, transmits control information (e.g., a ranging initiation message) for the other UWB anchors in the cluster. This information can include, for example, an allocation of slots among the different UWB anchors of the cluster. During the subsequent ranging phase 450, the different UWB anchors, or responders, may transmit in accordance with the allocated slot. That is, each anchor may be allocated a corresponding slot in the ranging phase 450 to transmit one or more ranging signals. According to some embodiments, sequential slots may be used to perform SS-TWR or DS-TWR. The ranging phase 450 may be followed by a measurement report phase 460 in which UWB anchors in a cluster may report measurements (e.g., of signals measured during the ranging phase 450).

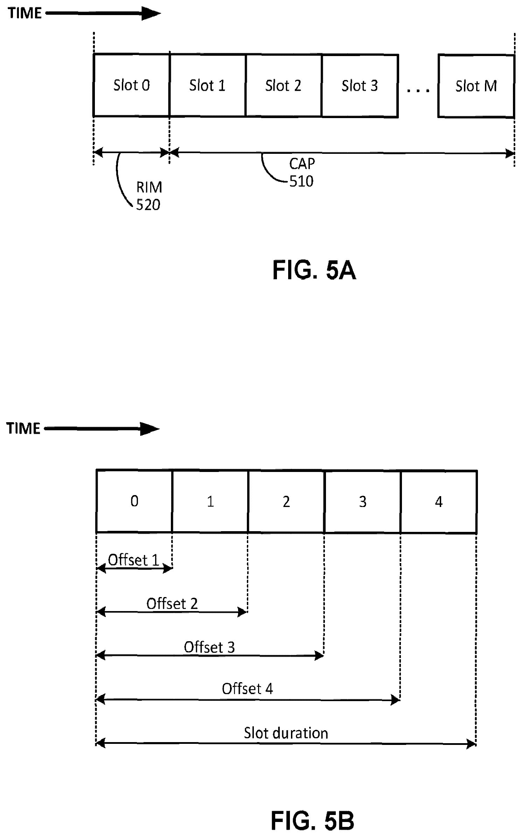

FIGS. 5A **and 5B** are timing diagrams illustrating how contention-based ranging using a Contention Access Period (CAP) 510 may be implemented, according to some. The CAP 510 may be preceded by a ranging initiation message (RIM) 520 (e.g., sent by the initiator). Contention-based ranging may be used, for example, when the controller does not know about the devices that will participate in the UWB Session. In such instances, the controller may always assume the role of the initiator and the controlees (e.g., one or more responding devices that will participate in the session) may always assume the role of the responders. To allow multiple controlee/responders to participate in the UWB session, the controller may advertise a CAP 510, which comprises a portion of slots within the ranging round. (Contents of the message advertising the CAP 510 may include parameters that may be chosen by the controller/initiator.) Essentially, the CAP 510 indicates slots within the round in which a controlee/responder may communicate to participate in the UWB session.

Devices that receive the message advertising the CAP 510 (e.g., potential controlees/responders) may respond based on, for example, rules implemented by the devices for participating in such ranging sessions. In particular, any controlee/responder that wants to participate in the UWB session a randomly select a slot of the CAP (e.g., which may be designated as slots 1 to M in each round, as indicated in FIG. 5A) and transmit a ranging message during the selected slot. Thus, the fewer controlee/responder responses and/or the larger the value for M, the less likely collisions are to occur.

According to some embodiments, each controlee/responder may also transmit after a random time offset within a slot. FIG. 5B illustrates example offsets for a slot. The allowable values for such a time offset are also contained within the control message. Once the controller has determined the identity of devices (e.g., using a responder management list - RML) after a contention-based round, it can reserve some of the slots for those devices that were able to send a message in the preceding round. The remaining slots in the CAP 510 (up to M) may continue to serve as slots that can be randomly selected by other unknown devices. Thus, for a controlee/responder, access to the UWB session may be random access until the controlee/responder is recognized by the controller/initiator and included on the RML, after which the controlee/responder is given a dedicated slot for communication.

According to some embodiments, "hybrid-based ranging" may be utilized in UWB, which is essentially a combination of the approaches described with respect to FIG. 4 and FIGS. 5A/5B. In hybrid-based ranging, a round may comprise at least one CAP and at least one contention free period (CFP) (e.g., corresponding to the time-scheduled or contention-free ranging described in FIG. 4) to accommodate both known controlees and unknown controlees. Again, the controller can broadcast the reserved slots of the CAP to allow unknown controlee/responders to respond (e.g., by selecting a random slot in the CAP in which to send a response message). Additionally, controlees that are known to the controller may be given a dedicated slot (e.g., in the configuration parameters broadcast by the controller) within the CFP in which to respond. A round may have multiple CAPs and/or multiple CFPs (also called CAP and CFP "phases"), depending on desired functionality. The first slot (slot 0) in each round may be reserved for in-band control information from the controller/initiator. Further, the first slot of each of the CAP and CFP phases may be reserved for control messages that determine the scheduling of the slots within the respective phase.

Downlink (DL) TDoA (DL-TDoA) measurements in UWB may be performed in accordance with one or more of the UE techniques described above (e.g., with respect to scheduling, contention, etc.) to perform positioning of a UWB device in a configuration such as the configuration illustrated in FIG. 2B. The DL-TDoA measurements in UWB may be in accordance with the standards set forth by FiRa^{™}, the standards organization comprising a consortium of multiple member entities developing standards for UWB ranging and positioning. In DL-TDoA (DT) positioning, a DL-TDoA Anchor (also referred to herein simply as an "anchor") may transmit a DL-TDoA Message (DTM) that can be used by tags (e.g., a mobile device or target device for which positioning or ranging is to be performed) to perform localization based on DL-TDoA. The tag may then measure the reception times of every DTM that it receives from a cluster of DL-TDoA Anchors, and utilize the reception timestamp along with the obtained coordinates of the DL-TDoA Anchors to estimate its position. According to some embodiments, the DTM messages also may be used for synchronization between the anchors. A final DTM message may be optional. Note that only the DT-Anchors exchange messages, and the tags passively listen and receive packets.

In this context, a cluster is a set of DT-Anchors that exchange DTMs with each other to provide a localization service to tags. The cluster may consist of one Initiator DT-Anchor (or "Init-anchor") and one or more Responder DT-Anchors (or "RESP Anchors"). According to some embodiments, a Bluetooth (and/or other wireless) advertiser broadcasts OOB configuration messages and creates a cluster of anchors within coverage area. To perform DL-TDoA positioning anchors in a cluster may transmit DTMs during different rounds of a positioning session, following the timing structure of a UWB positioning session as previously described with respect to FIG. 4. In each round, the transmission of the DTMs may comprise a poll DTM transmitted by the Init-anchor (e.g., in an initial slot of the respective round), followed by response DTMs transmitted by different Resp-anchors during different subsequent slots of the round. Optionally, there may be a final DTM message, again transmitted by the Init-anchor. Again, using the differential timing at which these messages are received by the tag, the location of the tag with respect to the anchors can be determined.

Similarly, uplink (UL) TDoA (UL-TDoA) may be performed by UWB devices. Generally speaking, the process used for UL-TDoA may be similar to the previously described process of DL-TDoA, in many aspects. However, in contrast to DL-TDoA in which the tag may remain passive (without the need to transmit any messages), the tag in UL-TDoA may transmit one or more UL messages in UL-TDoA, which are received by various anchors of a cluster. In particular, a tag transmits messages, called "blink" messages, in order to be located by the anchor infrastructure.

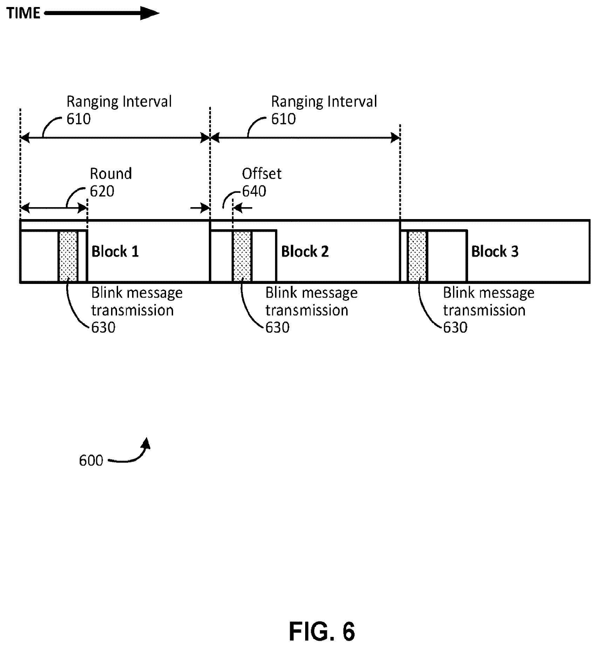

**FIG. 6** is a timing diagram 600 of an example series of ranging blocks used for UWB UL-TDoA. In a UL-TDoA scenario, a UL-TDoA anchor may be a UWB device (e.g., a FiRa device) that listens for blink messages from tags and/or synchronization messages from other anchors. The time interval, or ranging interval 610, between two consecutive blink messages from a given UL-TDoA tag defines the TDoA position update rate at which the tag can be located and is roughly correlated with the ranging interval 610. In FIG. 6 the interval 620 represents a round in which a blink message transmission 630 is transmitted. To reduce the likelihood of collisions, UL-TDoA devices may randomly select a slot (e.g., select a random offset 640, which may be unique to each round 620) to transmit a blink message. This is equivalent to all the devices transmitting during a CAP.

UL and DL TDoA positioning techniques may be used in different applications. For example, because DL-TDoA allows the tag to remain passive, it may be useful in applications where a device may not want the network to know its location (e.g., such as a navigation or positioning application for consumers to use in a retail environment while preserving their privacy). On the other hand, UL-TDoA allows the network to know the location of tags and may therefore be helpful in tracking packages and/or other logistical applications.

Additionally, UWB UL-TDoA may be limited in the amount of UL-TDoA tags it can support because the UL-TDoA tags contend on a CAP to transmit blink messages. That is, because slots in a CAP (e.g., as illustrated in FIG. 5A) are limited, the greater the number of UL-TDoA tags contending for slot in the CAP, the greater the likelihood of RF collisions. Embodiments provided herein address these and other issues arising in UWB UL- TDoA. In particular, embodiments provide for scalability in a hybrid-based ranging comprising both CAP and CFP slots by making use of CFP slots for known devices, moving devices from CAP slots to CFP slots once they become known. Further, embodiments may provide tag grouping and prioritization (device-side and network-side). Moreover, embodiments are not necessarily limited to UWB but additionally or alternatively may be implemented in NR. In particular, the embodiments provided herein can be extended to 3GPP Rel-18 sidelink (SL) out-of-coverage scenarios.

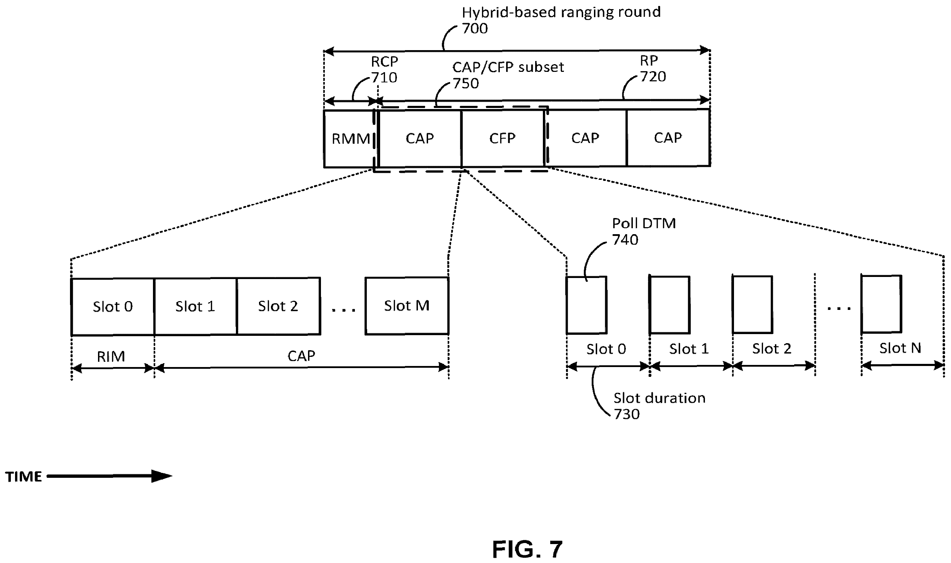

**FIG. 7** is a timing diagram of a hybrid-based ranging round 700, provided detailed illustrate how embodiments may implement a process for moving a UWB tag from a CAP to a CFP. As previously noted, a hybrid-based ranging round 700 includes one or more CAP and CFP portions. Specifically, the hybrid-based ranging round 700 may comprise a ranging control phase (RCP) 710 (in which a ranging management message (RMM) may be transmitted by the initiator), followed by a ranging phase (RP) 720 comprising one or more CAPs and one or more CFPs. (The RP 720 in FIG. 7 has two CAPs and to CFPs, but numbers may vary.) According to embodiments, the CAP may be used for unknown tags that will potentially send blink messages (e.g., as described above with respect to FIGS. 5A/5B and/or FIG. 6), while the CFP (comprising a series of slots having slot duration 730 in which transmissions may be made) is used for scheduled transmissions comprising synchronization between anchors for DL-TDoA and/or UL transmissions by known tags for UL-TDOA. Once a tag has successfully transmitted a blink message after contention in a CAP of the hybrid-based ranging round 700, it is known to the network and may therefore be assigned a CFP slot (e.g., by the initiator/controller), which can help reduce possible collisions and provide better priority to known devices. This "moving" of the tag's transmission from CAP to CFP can allow more room in the CAP for transmission by unknown devices.

To move a tag from a CAP to a CFP, the Init-anchor may broadcast a Poll-DTM message 740 in a CFP that includes the slot index and MAC address of the tag in the RML. This can effectively indicate to the tag (and other devices) that the tag is moving from a contention-based process to a CFP slot. According to some embodiments, the decision to move a tag can be based on a threshold such as, the average number of devices in the CAP. According to some embodiments, the Init-anchor of a cluster may coordinate the scheduling for its own cluster (e.g., not centralized across the network), which may apply to UL-TDoA positioning of a tag.

Depending on desired functionality, anchors used for a UL-TDoA session may be selected based on various factors. As previously noted, each hybrid-based ranging round may have one or more CFPs and/or one or more CAPs. Further, CAPs may be followed by CFPs making a CAP/CFP pair or subset (e.g., CAP/CFP subset 750 in FIG. 7). According to some embodiments, each CAP/CFP subset can be associated with a subgroup of anchors, where each subgroup of anchors may comprise a different combination of anchors in the anchor cluster. Thus, each CAP/CFP subset (e.g., each subgroup of anchors) may have different performance capabilities. For example, each subset/subgroup may provide a specific level of quality of service (QoS) in terms of the deliverable position accuracy (e.g., higher QoS provide for higher position accuracy). Parameter information related to QoS can be provided in a message sent on the downlink (e.g., by the Init-anchor) along with other UWB session information, such as timing.

A tag receiving the message can use the QoS parameter information to select which CAP/CFP subsets to use. For example, a tag can choose from these subsets based on QoS parameter information, which may include position accuracy, latency, position update rate, power consumption (e.g., sending fewer blink messages can allow for reduced power consumption by the tag), interference pattern (e.g., with a potential NR position reference signal (PRS) on the same channel), or a combination thereof.

According to some embodiments, the tag may select choose which part of a round to participate in, including whether to participate in a CAP and/or a CFP. If choosing to participate in a CAP, the tag can engage in the contention-based process for CAP as previously described. If choosing to participate in a CFP, the tag may be assigned a particular slot in multiple CFPs (e.g., by an Init-anchor), and the tag may decide which of the multiple CFPs in which to participate. This decision may be indicated in a blink message the tag transmits. As an example, a tag may receive QoS information and timing information in a first round for various CAP/CFP subsets in the UWB positioning session in which the tag may participate. The tag may select one or more CFPs (e.g., of the various CAP/CFP subsets) in which to participate based on this information period. To indicate its selection, the tag may then transmit a blink message in the first round, in one or more CAPs of the first round corresponding to the selected CFPs. In response, the Init-anchor can then designate a slot in each of the selected one or more CFPs in which the tag may transmit future blink messages. This designation can be communicated to the tag in a downlink message (e.g., in the control information) sent by the Init-anchor in the second round. Additionally or alternatively, the tag may indicate its selection to the Init-anchor by transmitting an OOB message to the Init-anchor indicative of the selected CFP
The downlink message including the information used by the tag to determine which CAP/CFC to use may be provided in different ways. For example, the Init-anchor may transmit a message at prior to the blink/transmission interval (e.g., in an RMM and/or RIM preceding the CAP) along with the corresponding QoS attributes. According to some embodiments, for example, this information may be included in a message transmitted at during the ranging control phase (RCP) (first slot of the round), the poll DTM, the OOB broadcast configuration message, or a combination thereof. Downlink message information can include timing information (e.g. start times of the available CAP phases) and corresponding QoS parameters (e.g., in terms of the clock stability and ground truth accuracy of the anchor nodes).

According to some embodiments, the network (e.g., an Init-anchor) may prioritize tags from which blink messages are received for slot designation in CFPs. For example, there may be insufficient available slots in a CFP to accommodate all the tags from which blink messages were received in a corresponding CAP. High-priority tags may be designated a slot in the CFP, while lower-priority tags may need to continue transmitting in the CAP.

According to some embodiments, priority information may be communicated via OOB messaging (e.g., from a tag to an Init-anchor). Priority of a tag may be based, for example, on whether the tag has a subscription to a "premium" positioning service and/or whether a tag is using positioning for a particular-priority use case/application. Such high-priority use cases/applications may comprise, for example, critical services such as medical or other emergency services.

In addition or as an alternative to being prioritized over lower-priority tags when being designated a slot in a CFP, high-priority tags may be given other advantages by the network. For example, high-priority tags may be assigned more opportunities to contend over the network such as a shorter ranging interval (e.g., as depicted in FIG. 6) that occurs more often. According to some embodiments, high-priority tags can be grouped together in a single CAP with a larger number of slots (e.g., a longer blink random interval, as depicted in FIG. 6), as opposed to low-priority tags (which may be grouped separately, but with lower number of slots). In other words, high-priority tags may be able to use slots in a CAP that are not available to lower-priority tags.

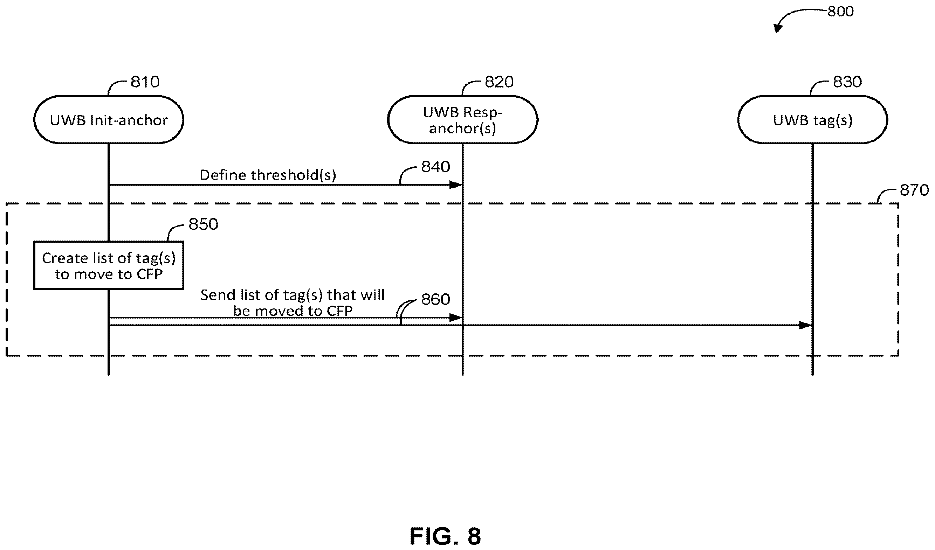

**FIG. 8** is a message flow diagram 800 illustrating a process for moving a tag from a CAP to a CFP, according to an embodiment. In this example, the UWB Init-anchor 810 is the controller of both (i) one or more UWB Resp-anchors 820 and (ii) one or more UWB tags (e.g., UWB-enabled mobile devices) 830. As with other figures provided herein, FIG. 8 illustrates a non-limiting example, and alternative embodiments may vary from the process illustrated by the diagram 800 (e.g., by rearranging, adding, omitting, or otherwise altering operations).

As illustrated by arrow 840, the Init-anchor 810 may send one or messages that define one or more thresholds for moving a known tag from a CAP to a CFP. According to some embodiments, different thresholds may be set by the Init-anchor, and may be specific to a particular CAP. (Different thresholds may be set for different CAPs.) For example, thresholds may be said based on traffic pattern (e.g., communication patterns of the Resp-anchor(s) 820, tag(s) 830, other detected wireless communication, or any combination thereof), mobility pattern (e.g., speed and/or direction of movement of the tag(s) 830), number of devices (e.g., in a CAP and/or corresponding CFP in a CAP/CFP subsets), etc., or any combination thereof.

Further, according to some embodiments, the Init-anchor 810 may send the one or more messages shown by arrow 840 periodically. This can allow a specific Resp-anchor to provide two-way ranging service to some other device, over the same CAP, if desired. That is, if the Resp-anchor is aware of its CAP threshold, it can accordingly modify/configure session parameters for its two-way ranging session with that device. Overall, the Resp-anchor can use this knowledge of the CAP threshold to tune any other service that it provides (independently of the Init-anchor).

The threshold information provided at arrow 840 can help provide useful functionality. For example, in a configuration in which a low-mobility tag may be transmitting on the CAP of several clusters, the threshold information may reduce the number of CAP slots for other tags in all these UWB clusters. Based on this, the Init-anchor 810 can decide to move this low-mobility tag to a CFP for some of the clusters. Additionally or alternatively, some devices may transmit during the CAP of every round, while some devices may skip rounds to save power. This, in such configurations, the Init-anchor 810 may move such "high-traffic" tags 830 to the CFP.

It can be noted that, according to some embodiments, threshold may not be communicated to Resp-anchor(s) 820, as indicated at arrow 840. Instead, the Init-anchor may define such threshold(s) internally.

If the Init-anchor 810 detects that a threshold has been exceeded for a given CAP, it may then move tags from the CAP to the corresponding CFP. According to some embodiments, this may comprise creating a list of tags to move to the corresponding CFP (as indicated by block 850) and moving one or more tags by notifying the tag(s) 830 and/or Resp-anchor(s) 820 in one or more messages, as indicated at arrows 860. As noted above, the move from CAP to CFP may be in accordance with an applicable prioritization. The one or more messages, which may be broadcast to all devices, may include the respective slot indexes and MAC addresses of the CFP corresponding for the moved tag(s) 830. As previously noted, these one or more messages may include a OOB message, control message, poll-DTM message, etc., or any combination thereof. According to some embodiments, the creation of the list of tag(s) 830 shown at block 850 and/or the sending of the one or more messages at arrow 860 may occur during hybrid-based ranging, as indicated at block 870. As previously noted, in such cases, the list of tag(s) may be included in a poll DTM message sent by the Init-anchor 810 in a CFP.

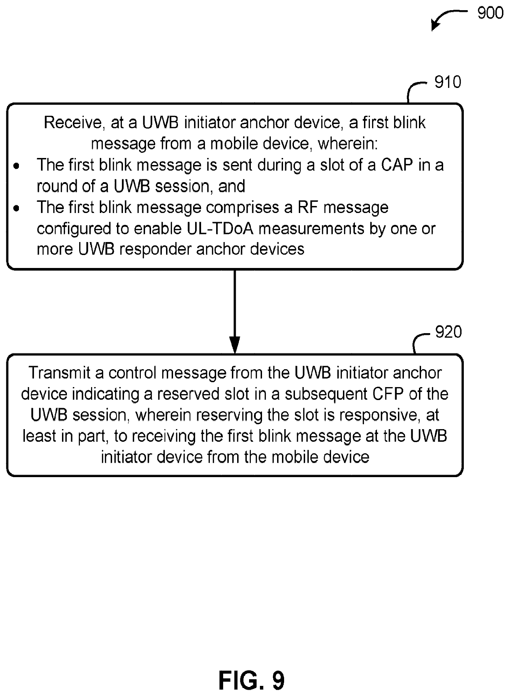

**FIG. 9** is a flow diagram of a method 900 of coordinating UWB positioning of a mobile device, according to an embodiment. Aspects of the method 900 may reflect functionality of an Init-anchor UWB device as described in the embodiments above. Means/structure for performing the functionality illustrated in one or more of the blocks shown in FIG. 9 may be performed by hardware and/or software components of a UWB device. Example components of such a UWB device are illustrated in FIGS. 11 and 12 which are described in more detail below.

At block 910, the functionality comprises receiving, at a UWB initiator anchor device, a first blink message from a mobile device, wherein the first blink message is sent during a slot of a CAP in a round of a UWB session, and the first blink message comprises a RF message configured to enable UL-TDoA measurements by one or more UWB responder anchor devices. The round of the UWB session may be a hybrid-based ranging round as described herein (e.g., with respect to FIG. 7). As such, the CAP may precede a CFP, in some embodiments.

Means/structure for performing functionality at block 910 may comprise a bus 1105, one or more processors 1110, digital signal processor (DSP) 1120, a wireless communications interface 1130 (which may include a UWB transceiver 1135) a memory 1160, and/or other components of a mobile UWB device 1100, as illustrated in FIG. 11. Means/structure for performing functionality at block 910 additionally or alternatively may comprise a bus 1205, one or more processors 1210, DSP 1220, a wireless communications interface 1230 (which may include a UWB transceiver 1235) a memory 1260, and/or other components of a stationary UWB device 1200, as illustrated in FIG. 12.

At block 920, the functionality comprises transmitting a control message from the UWB initiator anchor device indicating a reserved slot in a subsequent CFP of the UWB session, wherein reserving the slot is responsive, at least in part, to receiving the first blink message at the UWB initiator device from the mobile device. As noted above, the CFP may be located in the same round as the CAP, according to some embodiments. In fact, in some embodiments, the CFP may immediately follow the CAP in the round of the UWB session. In some cases, the CAP and CFP may comprise a CAP/CFP subset (e.g., as illustrated in FIG. 7).

Means/structure for performing functionality at block 920 may comprise a bus 1105, one or more processors 1110, DSP 1120, a wireless communications interface 1130 (which may include a UWB transceiver 1135) a memory 1160, and/or other components of a mobile UWB device 1100, as illustrated in FIG. 11. Means/structure for performing functionality at block 920 additionally or alternatively may comprise a bus 1205, one or more processors 1210, DSP 1220, a wireless communications interface 1230 (which may include a UWB transceiver 1235) a memory 1260, and/or other components of a stationary UWB device 1200, as illustrated in FIG. 12.

As noted in the embodiments herein, various additional features may be implemented, depending on desired functionality. For example, according to some embodiments, the control message a comprise a Poll DTM, or an OOB message, or a combination thereof. In some embodiments, the control message may comprise a slot index of the reserved slot and a MAC address of the mobile device. As described with respect to FIG. 7, reserving the slot may be further responsive to a determination that a threshold related to the UWB session has been met. In such cases, the threshold may comprise a threshold average number of devices in the CAP, a threshold related to a mobility pattern, or a threshold related to traffic pattern, or a combination thereof. In such embodiments, the method may additionally or alternatively comprise, prior to receiving the first blink message, sending a message indicative of the threshold related to the UWB session from the UWB initiator anchor device to the one or more UWB responder anchor devices participating in the UWB session.

As noted above, a QoS level may impact how the method 900 is performed. For example, in some embodiments the CAP may be associated with a QoS level, and wherein the method further may comprise transmitting a message from the UWB initiator anchor device indicative of the QoS level. In such embodiments, the message indicative of the QoS level may comprise an OOB message sent prior to receiving the first blink message, or an in-band message sent prior to the CAP (e.g., in an RMM and/or RIM message). Additionally or alternatively the QoS level may be based on an achievable position accuracy, a latency, a position update rate, a power consumption, an interference pattern, or a combination thereof.

As noted above, a priority level may impact how the method 900 is performed. For example, according to some embodiments reserving the slot may be further responsive to a determination of a priority level associated with the mobile device. In such embodiments, the determination of the priority level associated with the mobile device may comprise a determination that the priority level is a high priority, relative to a default priority. In such cases, the method may further comprise assigning the mobile device to a subsequent CAP designated for high priority mobile devices, based at least in part on the determination that the priority level associated with the mobile device is a high priority. Additionally or alternatively, the method may comprise enabling the mobile device to send blink messages in subsequent CAPs more frequently than mobile devices having a default priority, based at least in part on the determination that the priority level associated with the mobile device is a high priority.

**FIG. 10** is a flow diagram of a method 1000 of CFP selection for UL UWB positioning of a mobile device, according to an embodiment. Aspects of the method 1000 may reflect functionality of a tag or responder device as described in the embodiments above. Means/structure for performing the functionality illustrated in one or more of the blocks shown in FIG. 10 may be performed by hardware and/or software components of a mobile UWB device. Example components of such a UWB device are illustrated in FIG. 11 which is described in more detail below.

At block 1010, the functionality comprises receiving, at the mobile device from a UWB initiator anchor device, a message indicative of a respective QoS level of each of a plurality of CFPs in a UWB positioning session. According to some embodiments, the respective QoS level of each respective CFP of the plurality of CFPs may be indicative of an achievable position accuracy associated with the respective CFP, a latency associated with the respective CFP, a position update rate associated with the respective CFP, a power consumption associated with the respective CFP, an interference pattern associated with the respective CFP, or a combination thereof
Means/structure for performing functionality at block 1010 may comprise a bus 1105, one or more processors 1110, DSP 1120, a wireless communications interface 1130 (which may include a UWB transceiver 1135) a memory 1160, and/or other components of a mobile UWB device 1100, as illustrated in FIG. 11.

At block 1020, the functionality comprises selecting, with the mobile device, a CFP in which to participate based at least in part on the respective QoS level of the selected CFP. For example, as noted elsewhere herein, a device may choose a CAP/CFP subset to use based on QoS parameter information such as position accuracy, latency, position update rate, etc.

Means/structure for performing functionality at block 1020 may comprise a bus 1105, one or more processors 1110, DSP 1120, a wireless communications interface 1130 (which may include a UWB transceiver 1135) a memory 1160, and/or other components of a mobile UWB device 1100, as illustrated in FIG. 11.

At block 1030, the functionality comprises, responsive to selecting the CFP in which to participate (i) transmitting, with the mobile device, a first blink message during a slot of a CAP corresponding to the selected CFP, wherein the first blink message comprises a RF message configured to enable UL-TDoA measurements by one or more UWB responder anchor devices, (ii) transmitting, with the mobile device, an OOB message to the UWB initiator anchor device indicative of the selected CFP, or (iii) both (i) and (ii). In some embodiments, the mobile device transmits the first blink message during the slot of the CAP corresponding to the selected CFP. In such embodiments, the method may further comprise subsequent to transmitting the first blink message, receiving a control message from the UWB initiator anchor device indicating a reserved slot of the selected CFP for the mobile device, and transmitting a second blink message during the reserved slot of the selected CFP. The control message may comprise a Poll DTM, an OOB message, or a combination thereof. The control message may comprise a slot index of the reserved slot and a MAC address of the mobile device.

Means/structure for performing functionality at block 1030 may comprise a bus 1105, one or more processors 1110, DSP 1120, a wireless communications interface 1130 (which may include a UWB transceiver 1135) a memory 1160, and/or other components of a mobile UWB device 1100, as illustrated in FIG. 11.

**FIG. 11** is a block diagram of an embodiment of a mobile UWB device 1100, which can be utilized as described herein above. For example, the mobile UWB device 1100 may be used as a UWB device, mobile device, tag, UWB anchor, etc., as described herein. It should be noted that FIG. 11 is meant only to provide a generalized illustration of various components, any or all of which may be utilized as appropriate. For example, more basic/simple types of UWB devices may omit various components that may be included in more advanced/complex UWB devices. Furthermore, as previously noted, the functionality of the UE discussed in the previously described embodiments may be executed by one or more of the hardware and/or software components illustrated in FIG. 11.

The mobile UWB device 1100 is shown comprising hardware elements that can be electrically coupled via a bus 1105 (or may otherwise be in communication, as appropriate). The hardware elements may include a processor(s) 1110 which can include without limitation one or more general-purpose processors (e.g., an application processor), one or more special-purpose processors (such as digital signal processor (DSP) chips, graphics acceleration processors, application specific integrated circuits (ASICs), and/or the like), and/or other processing structures or means. Processor(s) 1110 may comprise one or more processing units, which may be housed in a single integrated circuit (IC) or multiple ICs. As shown in FIG. 11, some embodiments may have a separate DSP 1120, depending on desired functionality. Location determination and/or other determinations based on wireless communication may be provided in the processor(s) 1110 and/or wireless communication interface 1130 (discussed below). The mobile UWB device 1100 also can include one or more input devices 1170, which can include without limitation one or more keyboards, touch screens, touch pads, microphones, buttons, dials, switches, and/or the like; and one or more output devices 1115, which can include without limitation one or more displays (e.g., touch screens), light emitting diodes (LEDs), speakers, and/or the like.

The mobile UWB device 1100 may also include a wireless communication interface 1130, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, a WAN device, and/or various cellular devices, etc.), and/or the like, which may enable the mobile UWB device 1100 to communicate with other devices as described in the embodiments above. The wireless communication interface 1130 may permit data and signaling to be communicated (e.g., transmitted and received) with access points, various base stations and/or other access node types, and/or other network components, computer systems, and/or any other electronic devices communicatively coupled therewith. The communication can be carried out via one or more wireless communication antenna(s) 1132 that send and/or receive wireless signals 1134. According to some embodiments, the wireless communication antenna(s) 1132 may comprise a plurality of discrete antennas, antenna arrays, or any combination thereof. The antenna(s) 1132 may be capable of transmitting and receiving wireless signals using beams (e.g., Tx beams and Rx beams). Beam formation may be performed using digital and/or analog beam formation techniques, with respective digital and/or analog circuitry. The wireless communication interface 1130 may include such circuitry.

As illustrated, the wireless indication interface 1130 may further comprise a UWB transceiver 1135. The UWB transceiver 1135 may be operated to perform the UWB operations described herein. Further, the wireless communications interface 1130 may comprise one or more additional communication technologies with which the OOB functionalities described herein may be performed. According to some embodiments, the UWB transceiver 1135 may be one of a plurality of UWB transceivers of the mobile UWB device 1100. Further, the UWB transceiver may be used for functionality in addition to the UWB positioning functionality described herein. Although illustrated as part of the wireless communication interface 1130, the UWB transceiver 1135 may be separate from the wireless communication interface 1130 in some embodiments.

Depending on desired functionality, the wireless communication interface 1130 may comprise a separate receiver and transmitter, or any combination of transceivers, transmitters, and/or receivers to communicate with base stations (e.g., ng-eNBs and gNBs) and other terrestrial transceivers, such as wireless devices and access points. The mobile UWB device 1100 may communicate with different data networks that may comprise various network types. For example, a Wireless Wide Area Network (WWAN) may be a CDMA network, a Time Division Multiple Access (TDMA) network, a Frequency Division Multiple Access (FDMA) network, an Orthogonal Frequency Division Multiple Access (OFDMA) network, a Single-Carrier Frequency Division Multiple Access (SC-FDMA) network, a WiMAX (IEEE 802.16) network, and so on. A CDMA network may implement one or more RATs such as CDMA2000^{®}, WCDMA, and so on. CDMA2000^{®} includes IS-95, IS-2000 and/or IS-856 standards. A TDMA network may implement GSM, Digital Advanced Mobile Phone System (D-AMPS), or some other RAT. An OFDMA network may employ LTE, LTE Advanced, 5G NR, and so on. 5G NR, LTE, LTE Advanced, GSM, and WCDMA are described in documents from 3GPP. CDMA2000^{®} is described in documents from a consortium named "3rd Generation Partnership Project 2" (3GPP2). 3GPP and 3GPP2 documents are publicly available. A wireless local area network (WLAN) may also be an IEEE 802.11x network, and a wireless personal area network (WPAN) may be a Bluetooth network, an IEEE 802.15x, or some other type of network. The techniques described herein may also be used for any combination of WWAN, WLAN and/or WPAN.

The mobile UWB device 1100 can further include sensor(s) 1140. Sensor(s) 1140 may comprise, without limitation, one or more inertial sensors and/or other sensors (e.g., accelerometer(s), gyroscope(s), camera(s), magnetometer(s), altimeter(s), microphone(s), proximity sensor(s), light sensor(s), barometer(s), and the like), some of which may be used to obtain position-related measurements and/or other information.

Embodiments of the mobile UWB device 1100 may also include a Global Navigation Satellite System (GNSS) receiver 1180 capable of receiving signals 1184 from one or more GNSS satellites using an antenna 1182 (which could be the same as antenna 1132). Positioning based on GNSS signal measurement can be utilized to complement and/or incorporate the techniques described herein. The GNSS receiver 1180 can extract a position of the mobile UWB device 1100, using conventional techniques, from GNSS satellites of a GNSS system, such as Global Positioning System (GPS), Galileo, GLONASS, Quasi-Zenith Satellite System (QZSS) over Japan, IRNSS over India, BeiDou Navigation Satellite System (BDS) over China, and/or the like. Moreover, the GNSS receiver 1180 can be used with various + storage device, a solid-state storage device, such as a random access memory (RAM), and/or a read-only memory (ROM), which can be programmable, flash-updateable, and/or the like. Such storage devices may be configured to implement any appropriate data stores, including without limitation, various file systems, database structures, and/or the like.

The memory 1160 of the mobile UWB device 1100 also can comprise software elements (not shown in FIG. 11), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1160 that are executable by the mobile UWB device 1100 (and/or processor(s) 1110 or DSP 1120 within mobile UWB device 1100). In some embodiments, then, such code and/or instructions can be used to configure and/or adapt a general-purpose computer (or other device) to perform one or more operations in accordance with the described methods.

**FIG. 12** is a block diagram of an embodiment of a stationary UWB device 1200, which can be utilized as described herein above (e.g., as a UWB device, UWB anchor, etc.). It should be noted that FIG. 12 is meant only to provide a generalized illustration of various components, any or all of which may be utilized as appropriate. In some embodiments, the UWB anchor 1200 may correspond to an anchor UWB having a known location, which may be used to determine the location of other UWB devices, including mobile UWB devices. According to some embodiments, the stationary UWB device 1200 may be permanently stationary or temporarily stationary.

The stationary UWB device 1200 is shown comprising hardware elements that can be electrically coupled via a bus 1205 (or may otherwise be in communication, as appropriate). The hardware elements may include a processor(s) 1210 which can include without limitation one or more general-purpose processors, one or more special-purpose processors (such as DSP chips, graphics acceleration processors, ASICs, and/or the like), and/or other processing structure or means. As shown in FIG. 12, some embodiments may have a separate DSP 1220, depending on desired functionality. Location determination and/or other determinations based on wireless communication may be provided in the processor(s) 1210 and/or wireless communication interface 1230 (discussed below), according to some embodiments. The stationary UWB device 1200 also can include one or more input devices, which can include without limitation a keyboard, display, mouse, microphone, button(s), dial(s), switch(es), and/or the like; and one or more output devices, which can include without limitation a display, light emitting diode (LED), speakers, and/or the like.

The stationary UWB device 1200 might also include a wireless communication interface 1230, which may comprise without limitation a modem, a network card, an infrared communication device, a wireless communication device, and/or a chipset (such as a Bluetooth^{®} device, an IEEE 802.11 device, an IEEE 802.15.4 device, a Wi-Fi device, a WiMAX device, cellular communication facilities, etc.), and/or the like, which may enable the stationary UWB device 1200 to communicate as described herein. The wireless communication interface 1230 may permit data and signaling to be communicated (e.g., transmitted and received) to UEs, other base stations/TRPs (e.g., eNBs, gNBs, and ng-eNBs), and/or other network components, computer systems, and/or any other electronic devices described herein. The communication can be carried out via one or more wireless communication antenna(s) 1232 that send and/or receive wireless signals 1234.

As illustrated, the wireless indication interface 1230 may further comprise a UWB transceiver 1235. The UWB transceiver 1235 may be operated to perform the UWB operations described herein. Further, the wireless communications interface 1230 may comprise one or more additional communication technologies with which the OOB functionalities described herein may be performed. According to some embodiments, the UWB transceiver 1235 may be one of a plurality of UWB transceivers of the mobile UWB device 1200. Further, the UWB transceiver may be used for functionality in addition to the UWB positioning functionality described herein. Although illustrated as part of the wireless communication interface 1230, the UWB transceiver 1235 may be separate from the wireless communication interface 1230 in some embodiments.

The stationary UWB device 1200 may also include a network interface 1280, which can include support of wireline communication technologies. The network interface 1280 may include a modem, network card, chipset, and/or the like. The network interface 1280 may include one or more input and/or output communication interfaces to permit data to be exchanged with a network, communication network servers, computer systems, and/or any other electronic devices described herein. In some embodiments, the stationary UWB device 1200 may be communicatively coupled with one or more servers and/or other stationary UWB devices via the network interface 1280.

In many embodiments, the stationary UWB device 1200 may further comprise a memory 1260. The memory 1260 can include, without limitation, local and/or network accessible storage, a disk drive, a drive array, an optical storage device, a solid-state storage device, such as a RAM, and/or a ROM, which can be programmable, flash-updateable, and/or the like. Such storage devices may be configured to implement any appropriate data stores, including without limitation, various file systems, database structures, and/or the like.

The memory 1260 of the stationary UWB device 1200 also may comprise software elements (not shown in FIG. 12), including an operating system, device drivers, executable libraries, and/or other code, such as one or more application programs, which may comprise computer programs provided by various embodiments, and/or may be designed to implement methods, and/or configure systems, provided by other embodiments, as described herein. Merely by way of example, one or more procedures described with respect to the method(s) discussed above may be implemented as code and/or instructions in memory 1260 that are executable by the stationary UWB device 1200 (and/or processor(s) 1210 or DSP 1220 within stationary UWB device 1200). In some embodiments, then, such code and/or instructions can be used to configure and/or adapt a general-purpose computer (or other device) to perform one or more operations in accordance with the described methods.

The methods, systems, and devices discussed herein are examples. Various embodiments may omit, substitute, or add various procedures or components as appropriate. For instance, features described with respect to certain embodiments may be combined in various other embodiments. Different aspects and elements of the embodiments may be combined in a similar manner. The various components of the figures provided herein can be embodied in hardware and/or software.

It has proven convenient at times, principally for reasons of common usage, to refer to such signals as bits, information, values, elements, symbols, characters, variables, terms, numbers, numerals, or the like. It should be understood, however, that all of these or similar terms are to be associated with appropriate physical quantities and are merely convenient labels. Unless specifically stated otherwise, as is apparent from the discussion above, it is appreciated that throughout this Specification discussion utilizing terms such as "processing," "computing," "calculating," "determining," "ascertaining," "identifying," "associating," "measuring," "performing," or the like refer to actions or processes of a specific apparatus, such as a special purpose computer or a similar special purpose electronic computing device. In the context of this Specification, therefore, a special purpose computer or a similar special purpose electronic computing device is capable of manipulating or transforming signals, typically represented as physical electronic, electrical, or magnetic quantities within memories, registers, or other information storage devices, transmission devices, or display devices of the special purpose computer or similar special purpose electronic computing device.

Terms, "and" and "or" as used herein, may include a variety of meanings that also is expected to depend, at least in part, upon the context in which such terms are used. Typically, "or" if used to associate a list, such as A, B, or C, is intended to mean A, B, and C, here used in the inclusive sense, as well as A, B, or C, here used in the exclusive sense. In addition, the term "one or more" as used herein may be used to describe any feature, structure, or characteristic in the singular or may be used to describe some combination of features, structures, or characteristics. However, it should be noted that this is merely an illustrative example and claimed subject matter is not limited to this example. Furthermore, the term "at least one of" if used to associate a list, such as A, B, or C, can be interpreted to mean any combination of A, B, and/or C, such as A, AB, AA, AAB, AABBCCC, etc.

The above elements may merely be a component of a larger system, wherein other rules may take precedence over or otherwise modify the application of the various embodiments. Also, a number of steps may be undertaken before, during, or after the above elements are considered.

In view of this description embodiments may include different combinations of features.

## Claims

1. A method of contention free period, CFP, selection for Uplink Time Difference of Arrival, UL-TDoA, ultra-wideband, UWB, positioning of a mobile device, the method comprising:
receiving, at the mobile device from a UWB initiator anchor device, a message indicative of a respective QoS level of each of a plurality of CFPs in a UWB positioning session;
selecting, with the mobile device, a CFP in which to participate based at least in part on the respective QoS level of the selected CFP; and
responsive to selecting the CFP in which to participate:
transmitting, with the mobile device, a first blink message during a slot of a contention access period, CAP, corresponding to the selected CFP, wherein the first blink message comprises a radio frequency, RF, message configured to enable UL-TDoA measurements by one or more UWB responder anchor devices,
transmitting, with the mobile device, an out-of-band, OOB, message to the UWB initiator anchor device indicative of the selected CFP, or
both.

2. The method of claim 1, wherein the mobile device transmits the first blink message during the slot of the CAP corresponding to the selected CFP, the method further comprising:
subsequent to transmitting the first blink message, receiving a control message from the UWB initiator anchor device indicating a reserved slot of the selected CFP for the mobile device; and
transmitting a second blink message during the reserved slot of the selected CFP.

3. The method of claim 2, wherein the control message comprises:
a Poll DownLink Time Difference of Arrival (DL-TDoA) message (DTM),
an OOB message, or
a combination thereof.

4. The method of claim 2, wherein the control message comprises a slot index of the reserved slot and a Media Access Control, MAC, address of the mobile device.

5. The method of claim 1, wherein the respective QoS level of each respective CFP of the plurality of CFPs is indicative of:
an achievable position accuracy associated with the respective CFP,
a latency associated with the respective CFP,
a position update rate associated with the respective CFP,
a power consumption associated with the respective CFP,
an interference pattern associated with the respective CFP, or
a combination thereof.

6. A mobile device for contention free period, CFP, selection for Uplink Time Difference of Arrival, UL-TDoA, ultra-wideband, UWB, positioning of a mobile device, the mobile device comprising:
a transceiver;
a memory; and
one or more processors communicatively coupled with the transceiver and the memory, wherein the one or more processors are configured to:
receive, via the transceiver from a UWB initiator anchor device, a message indicative of a respective QoS level of each of a plurality of CFPs in a UWB positioning session;
select a CFP in which to participate based at least in part on the respective QoS level of the selected CFP; and
responsive to selecting the CFP in which to participate:
transmit, in the transceiver, a first blink message during a slot of a contention access period, CAP, corresponding to the selected CFP, wherein the first blink message comprises a radio frequency, RF, message configured to enable UL-TDoA measurements by one or more UWB responder anchor devices,
transmit, via the transceiver, an out-of-band, OOB, message to the UWB initiator anchor device indicative of the selected CFP, or
both.

7. The mobile device of claim 6, wherein the one or more processors are further configured to, when transmitting the first blink message during the slot of the CAP corresponding to the selected CFP:
subsequent to transmitting the first blink message, receive a control message from the UWB initiator anchor device indicating a reserved slot of the selected CFP for the mobile device; and
transmit a second blink message during the reserved slot of the selected CFP.

8. The mobile device of claim 7, wherein the control message comprises:
a Poll DownLink Time Difference of Arrival, DL-TDoA, message, DTM,
an OOB message, or
a combination thereof.

9. The mobile device of claim 7, wherein the control message comprises a slot index of the reserved slot and a Media Access Control, MAC, address of the mobile device.

10. The mobile device of claim 6, wherein the respective QoS level of each respective CFP of the plurality of CFPs is indicative of:
an achievable position accuracy associated with the respective CFP,
a latency associated with the respective CFP,
a position update rate associated with the respective CFP,
a power consumption associated with the respective CFP,
an interference pattern associated with the respective CFP, or
a combination thereof.

11. A non-transitory computer-readable medium storing instructions, the instructions comprising code for performing the method of any of claims 1 to 5.

## Patentansprüche

1. Verfahren zur CFP-(Contention Free Period)-Auswahl für die UL-TDoA-(Uplink Time Difference of Arrival)-UWB-(Ultra-Wideband)-Ortung eines mobilen Geräts, wobei das Verfahren Folgendes beinhaltet:
Empfangen, an dem mobilen Gerät von einem UWB-Initiator-Ankergerät, einer Nachricht, die ein jeweiliges QoS-Niveau jeder von mehreren CFPs in einer UWB-Ortungssitzung angibt;
Auswählen, mit dem mobilden Gerät, einer CFP zur Teilnahme zumindest teilweise auf der Basis des jeweiligen QoS-Niveaus der ausgewählten CFP; und
als Reaktion auf die Auswahl der CFP zur Teilnahme:
Senden, mit dem mobilen Gerät, einer ersten Blink-Nachricht während eines der ausgewählten CFP entsprechenden Slots einer CAP (Contention Access Period), wobei die erste Blink-Nachricht eine RF-(Radio Frequency)-Nachricht umfasst, die zum Ermöglichen von UL-TDoA-Messungen durch ein oder mehrere UWB-Responder-Ankergeräte konfiguriert ist;
Senden, mit dem mobilen Gerät, einer OOB-(Out-of-Band)-Nachricht zu dem die ausgewählte CFP angebenden UWB-Initiator-Ankergerät, oder
beides.

2. Verfahren nach Anspruch 1, wobei das mobile Gerät die erste Blink-Nachricht während des der ausgewählten CFP entsprechenden Slots der CAP sendet, wobei das Verfahren ferner Folgendes beinhaltet:
Empfangen, nach dem Senden der ersten Blinknachricht, einer Steuernachricht vom UWB-Initiator-Ankergerät, die einen reservierten Slot der ausgewählten CFP für das mobile Gerät angibt; und
Senden einer zweiten Blinknachricht während des reservierten Zeitfensters der ausgewählten CFP.

3. Verfahren nach Anspruch 2, wobei die Steuernachricht Folgendes umfasst:
eine Poll-(DL-TDoA (DownLink Time Difference of Arrival))-Nachricht (DTM),
eine OOB-Nachricht oder
eine Kombination davon.

4. Verfahren nach Anspruch 2, wobei die Steuernachricht einen Slot-Index des reservierten Slots und eine MAC-(Media Access Control)-Adresse des mobilen Geräts umfasst.

5. Verfahren nach Anspruch 1, wobei das jeweilige QoS-Niveau jeder jeweiligen CFP der mehreren CFPs Folgendes angibt:
eine mit der jeweiligen CFP assoziierte erreichbare Positionsgenauigkeit,
eine mit der jeweiligen CFP assoziierte Latenz,
eine mit der jeweiligen CFP assoziierte Positionsaktualisierungsrate,
einen mit der jeweiligen CFP assoziierten Stromverbrauch,
ein mit der jeweiligen CFP assoziiertes Interferenzmuster oder
eine Kombination davon.

6. Mobiles Gerät zur CFP-(Contention Free Period)-Auswahl für UL-TdoA-(Uplink Time Difference of Arrival)-UWB-(Ultra-Wideband)-Ortung eines mobilen Geräts, wobei das mobile Gerät Folgendes umfasst:
einen Transceiver;
einen Speicher; und
einen oder mehrere Prozessoren, die mit dem Transceiver und dem Speicher kommunikativ gekoppelt sind, wobei die ein oder mehreren Prozessoren konfiguriert sind zum:
Empfangen, über den Transceiver von einem UWB-Initiator-Ankergerät, einer Nachricht, die ein jeweiliges QoS-Niveau jeder von mehreren CFPs in einer UWB-Ortungssitzung angibt;
Auswählen einer CFP zur Teilnahme zumindest teilweise auf der Basis des jeweiligen QoS-Niveaus der ausgewählten CFP; und
als Reaktion auf die Auswahl der CFP zur Teilnahme:
Senden, in dem Transceiver, einer ersten Blinknachricht während eines der ausgewählten CFP entsprechenden Slots einer CAP (Contention Access Period), wobei die erste Blinknachricht eine RF-(Radio Frequency)-Nachricht umfasst, die zum Ermöglichen von UL-TDoA-Messungen durch ein oder mehrere UWB-Responder-Ankergeräte konfiguriert ist;
Senden, über den Transceiver, einer OOB-(Out-of-Band)-Nachricht zu dem die ausgewählte CFP angebenden UWB-Initiator-Ankergerät, oder
beides.

7. Mobiles Gerät nach Anspruch 6, wobei die ein oder mehreren Prozessoren ferner beim Senden der ersten Blinknachricht während des der ausgewählten CFP entsprechenden Slots der CAP konfiguriert sind zum:
Empfangen, nach dem Senden der ersten Blinknachricht, einer Steuernachricht vom UWB-Initiator-Ankergerät, die einen reservierten Slot der ausgewählten CFP für das mobile Gerät angibt; und
Senden einer zweiten Blinknachricht während des reservierten Zeitfensters der ausgewählten CFP.

8. Mobiles Gerät nach Anspruch 7, wobei die Steuernachricht Folgendes umfasst:
eine Poll-(DL-TDoA (DownLink Time Difference of Arrival))-Nachricht (DTM),
eine OOB-Nachricht oder
eine Kombination davon.

9. Mobiles Gerät nach Anspruch 7, wobei die Steuernachricht einen Slot-Index des reservierten Slots und eine MAC-(Media Access Control)-Adresse des mobilen Geräts umfasst.

10. Mobiles Gerät nach Anspruch 6, wobei das jeweilige QoS-Niveau jeder jeweiligen CFP der mehreren CFPs Folgendes angibt:
eine mit der jeweiligen CFP assoziierte erreichbare Positionsgenauigkeit,
eine mit der jeweiligen CFP assoziierte Latenz,
eine mit der jeweiligen CFP assoziierte Positionsaktualisierungsrate,
einen mit der jeweiligen CFP assoziierten Stromverbrauch,
ein mit der jeweiligen CFP assoziiertes Interferenzmuster oder
eine Kombination davon.

11. Nichtflüchtiges, computerlesbares Medium, auf dem Befehle gespeichert sind, wobei die Befehle Code zum Durchführen des Verfahrens nach einem der Ansprüche 1 bis 5 umfassen.

## Revendications

1. Procédé de sélection de période sans contention, CFP, pour un positionnement par différence de temps d'arrivée en liaison montante, UL-TDoA, à ultra-large bande, UWB, d'un dispositif mobile, le procédé comprenant :
la réception, au niveau du dispositif mobile à partir d'un dispositif d'ancrage initiateur UWB, d'un message indicatif d'un niveau de QoS respectif de chacune d'une pluralité de CFP dans une session de positionnement UWB ;
la sélection, avec le dispositif mobile, d'une CFP à laquelle participer sur la base au moins en partie du niveau de QoS respectif de la CFP sélectionnée ; et
en réponse à la sélection de la CFP à laquelle participer :
la transmission, avec le dispositif mobile, d'un premier message de clignotement durant un créneau d'une période d'accès en contention, CAP, correspondant à la CFP sélectionnée, dans lequel le premier message de clignotement comprend un message radiofréquence, RF, configuré pour permettre des mesures UL-TDoA par un ou plusieurs dispositifs d'ancrage répondeurs UWB,
la transmission, avec le dispositif mobile, d'un message hors bande, OOB, au dispositif d'ancrage initiateur UWB indiquant la CFP sélectionnée, ou
les deux.

2. Procédé selon la revendication 1, dans lequel le dispositif mobile transmet le premier message de clignotement durant le créneau de la CAP correspondant à la CFP sélectionnée, le procédé comprenant en outre :
après la transmission du premier message de clignotement, la réception à partir du dispositif d'ancrage initiateur UWB d'un message de commande indiquant un créneau réservé de la CFP sélectionnée pour le dispositif mobile ; et
la transmission d'un second message de clignotement durant le créneau réservé de la CFP sélectionnée.

3. Procédé selon la revendication 2, dans lequel le message de commande comprend :
un message de différence de temps d'arrivée de liaison descendante (DL-TDoA) d'interrogation (DTM),
un message OOB, ou
une combinaison des deux.

4. Procédé selon la revendication 2, dans lequel le message de commande comprend un indice de créneau du créneau réservé et une adresse de commande d'accès au support, MAC, du dispositif mobile.

5. Procédé selon la revendication l, dans lequel le niveau de QoS respectif de chaque CFP de la pluralité de CFP est indicatif :
d'une précision de position réalisable associée à la CFP respective,
d'une latence associée à la CFP respective,
d'un taux de mise à jour de position associé à la CFP respective,
d'une consommation d'énergie associée à la CFP correspondante,
d'un motif d'interférence associé à la CFP respective, ou
d'une combinaison de ceux-ci.

6. Dispositif mobile de sélection de période sans contention, CFP, pour positionnement par différence de temps d'arrivée en liaison montante, UL-TDoA, à ultra-large bande, UWB, d'un dispositif mobile, le dispositif mobile comprenant :
un émetteur-récepteur ;
une mémoire ; et
un ou plusieurs processeurs couplés en communication à l'émetteur-récepteur et à la mémoire, dans lequel les un ou plusieurs processeurs sont configurés pour :
recevoir, par l'intermédiaire de l'émetteur-récepteur à partir d'un dispositif d'ancrage initiateur UWB, un message indicatif d'un niveau de QoS respectif de chacune d'une pluralité de CFP dans une session de positionnement UWB ;
sélectionner une CFP à laquelle participer sur la base au moins en partie du niveau de QoS respectif de la CFP sélectionnée ; et
en réponse à la sélection de la CFP à laquelle participer :
transmettre, dans l'émetteur-récepteur, un premier message de clignotement durant un créneau d'une période d'accès en contention, CAP, correspondant à la CFP sélectionnée, dans lequel le premier message de clignotement comprend un message radiofréquence, RF, configuré pour permettre des mesures UL-TDoA par un ou plusieurs dispositifs d'ancrage répondeurs UWB,
transmettre, par l'intermédiaire de l'émetteur-récepteur, un message hors bande, OOB, au dispositif d'ancrage initiateur UWB indiquant la CFP sélectionnée, ou
les deux.

7. Dispositif mobile selon la revendication 6, dans lequel les un ou plusieurs processeurs sont configurés en outre pour, lors de la transmission du premier message de clignotement durant le créneau de la CAP correspondant à la CFP sélectionnée :
après avoir transmis le premier message de clignotement, recevoir un message de commande à partir du dispositif d'ancrage initiateur UWB indiquant un créneau réservé de la CFP sélectionnée pour le dispositif mobile ; et
transmettre un second message de clignotement durant le créneau réservé de la CFP sélectionnée.

8. Dispositif mobile selon la revendication 7, dans lequel le message de commande comprend :
un message de différence de temps d'arrivée de liaison descendante (DL-TDoA) d'interrogation (DTM),
un message OOB, ou
une combinaison des deux.

9. Dispositif mobile selon la revendication 7, dans lequel le message de commande comprend un indice de créneau du créneau réservé et une adresse de commande d'accès au support, MAC, du dispositif mobile.

10. Dispositif mobile selon la revendication 6, dans lequel le niveau de QoS respectif de chaque CFP correspondant à la pluralité de CFP est indicatif :
d'une précision de position réalisable associée à la CFP respective,
d'une latence associée à la CFP respective,
d'un taux de mise à jour de position associé à la CFP respective,
d'une consommation d'énergie associée à la CFP correspondante,
d'un motif d'interférence associé à la CFP respective, ou
d'une combinaison de ceux-ci.

11. Support non transitoire lisible par ordinateur stockant des instructions, les instructions comprenant un code pour réaliser le procédé selon l'une quelconque des revendications 1 à 5.
